(19) **Europäisches Patentamt / European Patent Office / Office européen des brevets**

(11) **EP 4 583 310 A1**

(12) **EUROPEAN PATENT APPLICATION**
published in accordance with Art. 153(4) EPC

(43) Date of publication:
**09.07.2025 Bulletin 2025/28**

(21) Application number: **23860142.1**

(22) Date of filing: **23.08.2023**

(51) International Patent Classification (IPC):
**H01Q 3/26** (2006.01)   **H04W 52/04** (2009.01)
**H04W 88/02** (2009.01)

(52) Cooperative Patent Classification (CPC):
**H01Q 3/26; H04W 52/04; H04W 88/02**

(86) International application number:
**PCT/JP2023/030221**

(87) International publication number:
**WO 2024/048379 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.08.2022 JP 2022137095**

(71) Applicant: **Sony Group Corporation
Tokyo 108-0075 (JP)**

(72) Inventors:
- **KITABATA, Goh**
  **Tokyo 108-0075 (JP)**
- **IKUTA, Isao**
  **Tokyo 108-0075 (JP)**
- **MASHIMO, Kazuki**
  **Tokyo 108-0075 (JP)**

(74) Representative: **D Young & Co LLP
3 Noble Street
London EC2V 7BQ (GB)**

(54) **COMMUNICATION DEVICE, COMMUNICATION METHOD, INFORMATION PROCESSING DEVICE, AND INFORMATION PROCESSING METHOD**

(57) A communication device includes: an acquisition unit that acquires setting information on power feeding to an array antenna, which has been calculated based on an evaluation criterion based on equivalent isotropic radiated power (EIRP) and power density at a predetermined legally regulated area average; and a communication control unit that controls the array antenna based on the setting information.

FIG.5

EP 4 583 310 A1

## Description

Field

The present disclosure relates to a communication device, a communication method, an information processing device, and an information processing method.

Background

A communication device capable of performing beamforming is known. The communication device capable of performing beamforming includes, for example, an array antenna including a plurality of antenna elements, and forms a directional beam by changing a phase of a signal to be supplied to each antenna element. In general, the communication device has setting information on power feeding to the array antenna, and controls the array antenna in accordance with the setting information. A setting for controlling the array antenna has been adjusted such that peak EIRP is maximized.

Citation List

Patent Literature

Patent Literature 1: WO 2021/084592

Summary

Technical Problem

When an array antenna is controlled such that peak EIRP is maximized, power density tends to increase. Legal regulations regarding power density (PD) are, however, imposed on wireless facilities used near human bodies, such as mobile terminals, for protecting the human bodies. When a legal regulation regarding power density is not satisfied, a communication device has no choice but to inhibit output of radio waves for satisfying the legal regulation. This prevents the communication device from achieving high communication performance (e.g., long communication distance, stable communication quality, low delay, high reliability, and high throughput).

Thus, the present disclosure proposes a communication device, a communication method, an information processing device, and an information processing method capable of achieving the high communication performance.

Note that the above-described problem or object is merely one of a plurality of problems or objects that can be solved or achieved by a plurality of embodiments disclosed in the present specification.

Solution to Problem

In order to solve the above problem, an communication device according to one embodiment of the present disclosure includes: an acquisition unit that acquires setting information on power feeding to an array antenna, which has been calculated based on an evaluation criterion based on equivalent isotropic radiated power (EIRP) and power density at a predetermined legally regulated area average; and a communication control unit that controls the array antenna based on the setting information.

Brief Description of Drawings

FIG. 1 illustrates beamforming.
FIG. 2 illustrates the beamforming.
FIG. 3 illustrates incident power density.
FIG. 4 illustrates time average control.
FIG. 5 illustrates an example of control of an embodiment.
FIG. 6 illustrates how a development device performs simulation.
FIG. 7 illustrates an EIRP simulation result.
FIG. 8 illustrates an effect of the embodiment in a case where the time average control is performed.
FIG. 9 illustrates configuration examples of a development system and a communication system according to the embodiment of the present disclosure.

FIG. 10 illustrates a configuration example of the development device according to the embodiment of the present disclosure.

FIG. 11 illustrates a configuration example of a base station according to the embodiment of the present disclosure.

FIG. 12 illustrates a configuration example of a terminal device according to the embodiment of the present disclosure.

FIG. 13 illustrates a circuit configuration of an antenna.

FIG. 14 illustrates a configuration example of the antenna.

FIG. 15 illustrates a configuration example of the antenna.

FIG. 16 is a cross-sectional view taken along line A-A in FIG. 15.

FIG. 17 illustrates another configuration example of the antenna.

FIG. 18 is a flowchart illustrating optimization processing according to a first embodiment.

FIG. 19 outlines the operation of a communication device according to a second embodiment.

FIG. 20 is a flowchart illustrating optimization processing according to the second embodiment.

FIG. 21 illustrates a result of comparing power densities before and after power optimization.

FIG. 22 illustrates an influence on a beam direction in a case where pieces of power to antenna ports are individually changed.

FIG. 23 illustrates the relation between $\theta$ and $\phi$ in FIG. 22.

FIG. 24 illustrates the usefulness of an optimization means.

Description of Embodiments

Embodiments of the present disclosure will be described in detail below with reference to the drawings. Note that, in the following embodiments, the same reference signs are attached to the same parts to omit duplicate description.

Furthermore, in the present specification and the drawings, a plurality of components having substantially the same functional configuration may be distinguished by attaching different numbers after the same reference signs. For example, a plurality of configurations having substantially the same functional configuration is distinguished as terminal devices $30_1$, $30_2$, and $30_3$, as necessary. Note, however, that, when it is unnecessary to particularly distinguish a plurality of components having substantially the same functional configuration, only the same reference signs are attached. For example, when it is unnecessary to particularly distinguish the terminal devices $30_1$, $30_2$, and $30_3$, the terminal devices $30_1$, $30_2$, and $30_3$ are simply referred to as terminal devices 30.

One or a plurality of embodiments (including examples and variations) to be described below can be implemented independently. In contrast, at least a part of the plurality of embodiments to be described below may be appropriately combined and implemented with at least a part of other embodiments. The plurality of embodiments can include different novel features. Therefore, the plurality of embodiments may contribute to solving different objects or problems, and may exhibit different effects.

<<1. Outline>>

First, an embodiment will be outlined.

<1-1. Outline of Beamforming>

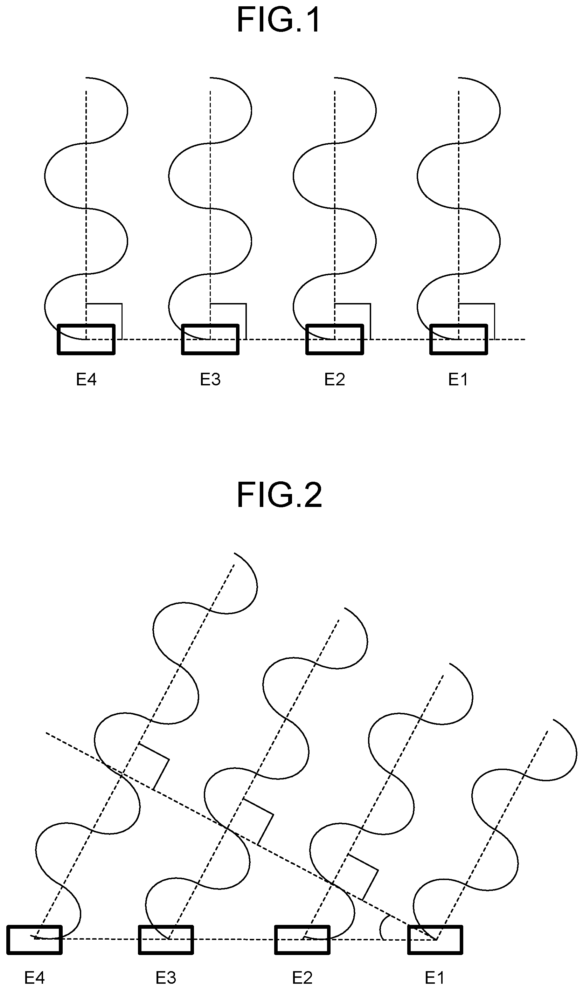

FIGS. 1 and 2 illustrate beamforming. A communication device capable of performing beamforming includes, for example, an array antenna including a plurality of antenna elements. In examples of FIGS. 1 and 2, the array antenna includes four antenna elements of antenna elements E1 to E4. The communication device forms directional beams by changing the phases of signals to be supplied to the antenna elements. For example, as illustrated in FIG. 1, the communication device can vertically radiate radio waves by feeding power to the antenna elements with the phases being aligned. Furthermore, for example, as illustrated in FIG. 2, the communication device can shift a radio wave transmission direction by feeding power to the antenna elements with the phases being shifted.

In order to control a feeding phase, the communication device needs to preliminarily know phase information on each antenna element in a specific direction. Therefore, in general, the communication device preliminarily stores setting information on power feeding to an array antenna. For example, the communication device preliminarily stores a beamforming table regarding the phases of signals to be supplied to the antenna elements in the array antenna. The communication device controls the array antenna in accordance with the setting information.

<1-2. Outline of EIRP and PD>

In general, a setting for controlling the array antenna is adjusted such that peak EIRP is maximized. Here, the EIRP is an abbreviation for equivalent isotropic radiated power and effective isotropic radiated power. The EIRP indicates the intensity of radio waves radiated in a fixed direction. More specifically, the EIRP is required in a case where it is assumed that the communication device radiates radio waves in all directions at the same level as the communication device radiates radio waves in a certain direction. For example, W or dBm is used as a unit thereof. Since the EIRP is directly linked to a communication distance and a communication speed, as high power as possible is desired.

When the array antenna is controlled such that the peak EIRP is maximized, power density tends to increase. Legal regulations regarding power density (PD) are imposed on the communication device for protecting human bodies. The legal regulations are established for each country. For example, in Japan, when a frequency band exceeding 6 GHz is used in a wireless facility used near a human body, such as a mobile phone terminal, it is necessary to set the incident power density of radio waves emitted from the wireless facility to an allowable value indicated in (1) and (2) below. Note that an average time is designated by the legal regulations, and is six minutes on average in Japan.

(1) Frequency band of more than 6 GHz and 30 GHz or less
In any body surface area of 4 $cm^2$ of a human body (excluding both hands), 2 mW/$cm^2$ or less of an amount of energy passing for an average time of six minutes.
(2) Frequency band of more than 30 GHz and 300 GHz or less

In any body surface area of 1 $cm^2$ of a human body (excluding both hands), 2 mW/$cm^2$ or less of an amount of energy passing for an average time of six minutes.

Here, the power density is passing power per unit area perpendicular to the direction of electromagnetic wave propagation. Furthermore, the incident power density is a power density at a predetermined legally regulated area average. More specifically, the incident power density is a power density at an averaged area on any body surface (or any free space). Note that a position of the body surface (free space) may be replaced with a flat surface at a fixed distance from the surface of a housing of the communication device. For example, the position of the body surface (free space) may be a flat surface at a position 2 mm away from the housing surface, or a flat surface at a position 15 mm away from the housing surface. This position may be different for each country (for each legal regulation).

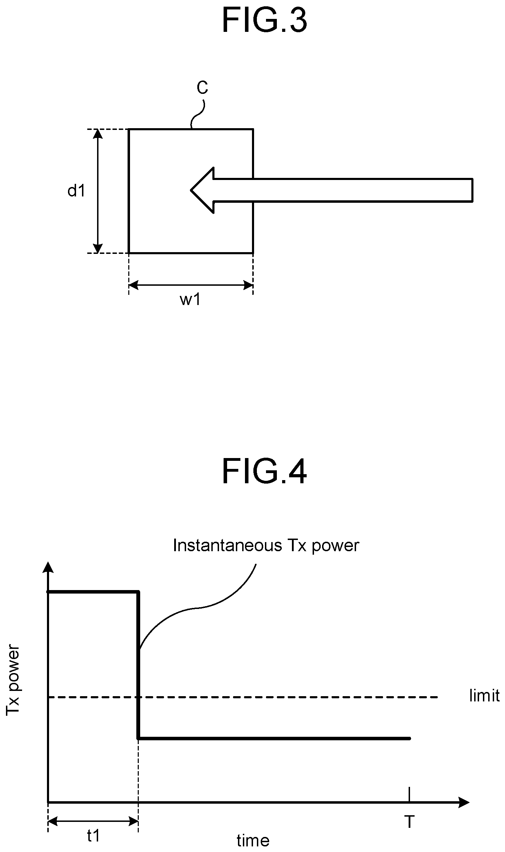

FIG. 3 illustrates the incident power density. A frame C in FIG. 3 indicates a predetermined legally regulated area (averaged area). In the case of (1) above, the frame C is a quadrangular frame having d1 and w1 of 2 cm each. In this case, the legally regulated area is 4 $cm^2$. Furthermore, in the case of (2) above, the frame C is a quadrangular frame having d1 and w1 of 1 cm each. In this case, the legally regulated area is 1 $cm^2$. In an example of FIG. 3, the incident power density is an average power density of radio waves passing through the frame C.

Here, for example, the frame C is located at a position with the highest average power density on the surface of the housing of the communication device or a flat surface away from the surface of a housing H by a predetermined distance (e.g., several millimeters to several centimeters). As described above, the predetermined distance may be different for each country (for each legal regulation). Note that, in the following description, this frame C is referred to as an average frame C.

Note that the regulation value here (e.g., size of average frame C, average time, and allowable value of power density) is different for each country (for each legal regulation). The technique described in the embodiment can also be applied to a legal regulation other than the above-described regulation values.

<1-3. Outline of Problem>

As described above, when the array antenna is controlled such that the peak EIRP is maximized, power density tends to increase. When a legal regulation regarding power density is not satisfied, the communication device has no choice but to inhibit output of radio waves for satisfying the legal regulation. For example, in order to comply with a regulation, the communication device lowers the average power density to a regulation value or less by lowering power or performing time average control. FIG. 4 illustrates the time average control. In an example of FIG. 4, the communication device decreases the average power density to the regulation value or less by shortening a total power transmission period t1 in an average time T (e.g., six minutes).

Since the inhibited output lowers the EIRP, the communication device cannot achieve high communication performance (e.g., long communication distance, stable communication quality, low delay, high reliability, and high throughput).

<1-4. Outline of Solution>

In the embodiment, the setting information on power feeding to an array antenna (e.g., phase value for beamforming) is optimized in consideration of not only EIRP but power density (PD). That is, in the embodiment, EIRP optimization is performed at output satisfying a power density regulation.

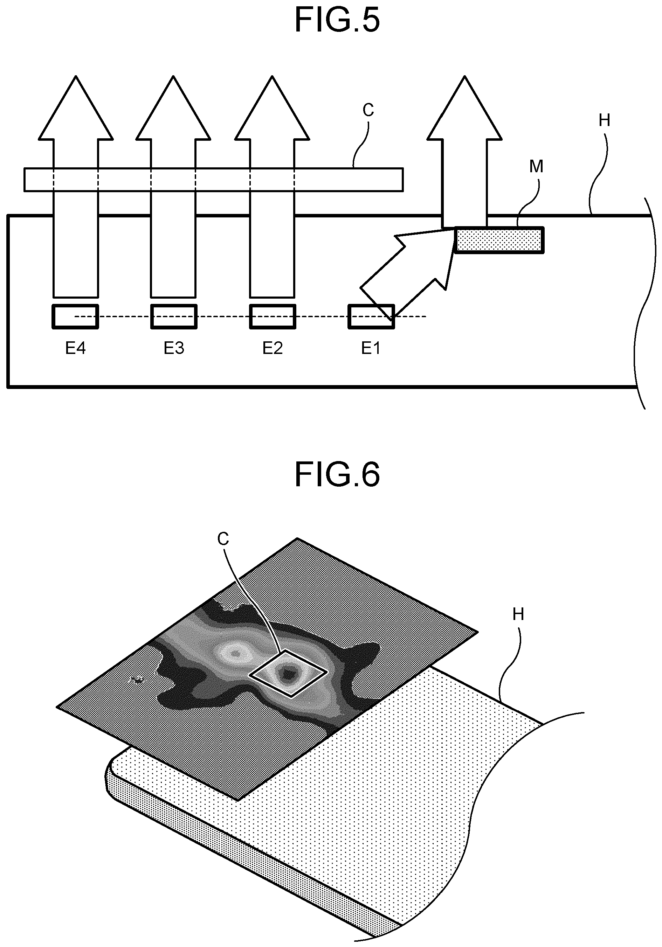

FIG. 5 illustrates an example of control of the embodiment. In an example of FIG. 5, an array antenna including four antenna elements E1 to E4 is disposed inside the housing H of the communication device. An object M is disposed near the array antenna. The object M is a component of the communication device disposed inside the housing H. The object M may be an antenna of another band or a structure such as a camera. The object M may be another metal object. Furthermore, in the example of FIG. 5, the average frame C is disposed on a flat surface away from the surface of the housing H by a predetermined distance (e.g., several millimeters to several centimeters).

In the embodiment, instead of simply performing phase optimization in a straight advancing direction, the feeding phase is optimized also in consideration of the reflection of radio waves on the object M as illustrated in FIG. 5, for example. This enables the communication device to lower the power density in the average frame C.

The optimization of the embodiment may be performed by the following process.

For example, a developer of a communication device models a housing structure of the communication device. Then, the developer performs electromagnetic field simulation, and calculates EIRP and power density based on the result of the electromagnetic field simulation. A computer (hereinafter, referred to as development device) calculates the EIRP and the power density. FIG. 6 illustrates how the development device performs simulation. In an example of FIG. 6, a simulation result of the power density on a flat surface away from the surface of the housing H by a predetermined distance (e.g., several millimeters to several centimeters) is illustrated. In the example of FIG. 6, the average frame C is illustrated at a position having the highest average power density on the flat surface. The development device calculates the EIRP of the array antenna and the power density at a predetermined legally regulated area average while changing the setting regarding the feeding phase. The development device calculates setting information regarding power feeding to the array antenna **(e.g.,** optimum value of feeding phase of each antenna element) by applying the calculated value to a predetermined evaluation criterion.

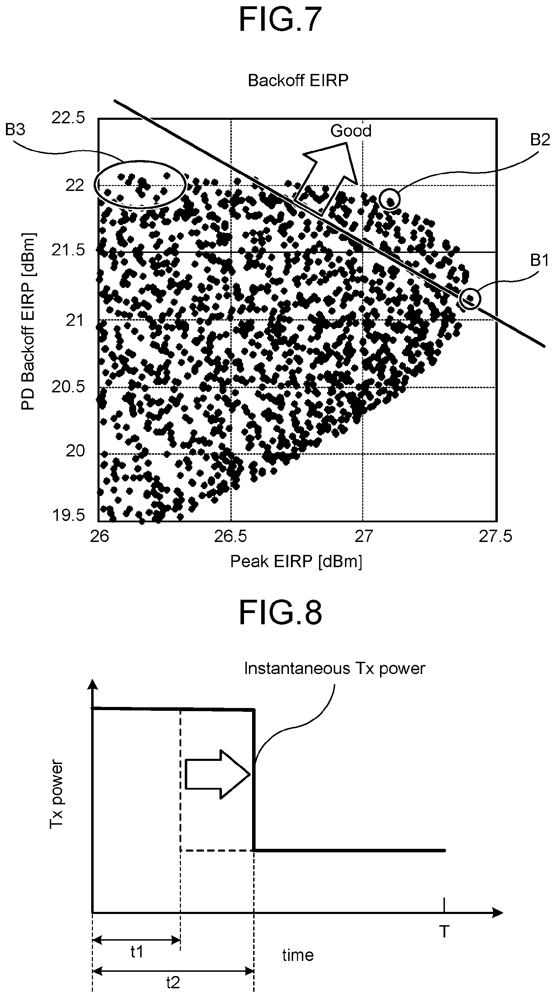

FIG. 7 illustrates an EIRP simulation result. The vertical axis represents backoff EIRP. The horizontal axis represents peak EIRP. The backoff EIRP is EIRP in a case where output of radio waves is inhibited so as to satisfy a legal regulation regarding power density (PD). The peak EIRP is EIRP in a case where output inhibition for a power density regulation is not performed. For example, when the communication device performs time average control in FIG. 4, the backoff EIRP is EIRP in a case where a total power transmission period is inhibited so as to satisfy the legal regulation (case of t1 < T), and the peak EIRP is EIRP in a case where the total power transmission period is not inhibited (case of t1 = T). Each of the points in FIG. 7 indicates an EIRP simulation result in a certain setting.

In a conventional optimization method using only peak EIRP as an evaluation criterion, a setting in which a result illustrated by B1 in FIG. 7 is established is selected as the optimum value of the feeding phase. In the result, the peak EIRP is the highest. In this case, the EIRP (peak EIRP) in total output is 27.4 dBm while the EIRP (backoff EIRP) in regulated output is 21.2 dBm. In the embodiment, however, optimization is performed including not only the peak EIRP but power density (PD). Therefore, a setting in which a result illustrated by B2 in FIG. 7 is established is selected as the optimum value of the feeding phase. In this case, the EIRP (peak EIRP) in total output is 27.0 dBm while the EIRP (backoff EIRP) in regulated output is improved to 21.9 dBm. Note that, in the case of a setting in which a result illustrated by B3 in FIG. 7 is established, the PD is lowered. Since the peak EIRP is also low, however, the setting is not good.

The communication device can improve the EIRP while satisfying the power density regulation by controlling communication using the setting determined by the method of the embodiment. FIG. 8 illustrates an effect of the embodiment in a case where the time average control is performed. As illustrated in, for example, FIG. 8, the communication device can extend the total power transmission period from t1 to t2 by controlling communication using the setting determined by the method of the embodiment. As a result, the communication device can achieve high communication performance (e.g., long communication distance, stable communication quality, low delay, high reliability, and high throughput).

Note that, in a case where a brute-force approach is simply used for phases, a huge number of combinations, such as approximately one million combinations, are generated. Therefore, it takes a long time to optimize the setting information. For example, in a case of the brute-force approach, an optimization time is approximately one day per module, band, and polarized wave. Thus, in the embodiment, a calculation amount is reduced by Bayesian optimization. The development device can shorten the optimization time per module, band, and polarized wave to approximately 10 to 20 minutes by using Bayesian optimization.

<<2. System Configuration>>

The embodiment has been outlined above. Prior to describing the embodiment in detail, configurations of a development system 1 including an information processing device of the embodiment and a communication system 2 including a communication device of the embodiment will be described.

<2-1. System Configuration Example>

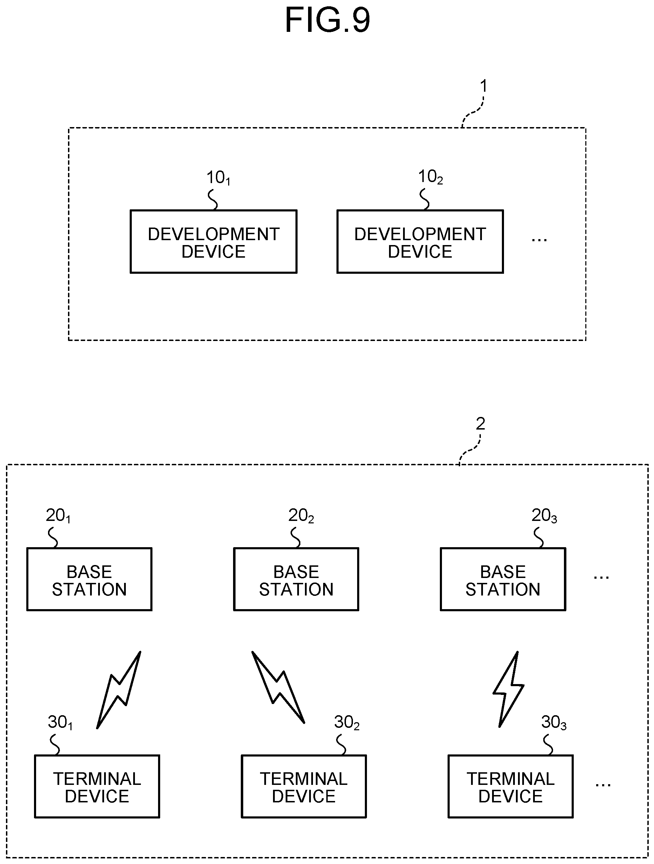

FIG. 9 illustrates configuration examples of the development system 1 and the communication system 2 according to the embodiment of the present disclosure.

The development system 1 is used for developing a communication device (e.g., terminal device and base station). The development system 1 includes a development device 10. The development system 1 may include a plurality of development devices 10. In an example of FIG. 9, the development system 1 includes, for example, development devices $10_1$ and $10_2$ serving as development devices 10.

The communication system 2 is used for providing a wireless network to a user. The communication system 2 provides the wireless network capable of mobile communication to the user by wireless communication devices constituting the communication system 2 operating in cooperation. The communication system 2 includes a base station 20 and a terminal device 30. The communication system 2 may include a plurality of base stations 20 and a plurality of terminal devices 30. In the example of FIG. 9, the communication system 2 includes base stations $20_1$, $20_2$, and $20_3$ serving as base stations 20, and includes terminal devices $30_1$, $30_2$, and $30_3$ serving as terminal devices 30.

The terminal device 30 may be connected to a network by using radio access technology (RAT) such as long term evolution (LTE), new radio (NR), Wi-Fi, and Bluetooth (registered trademark). In this case, the terminal device 30 may be able to use different types of radio access technology (wireless communication methods). For example, the terminal device 30 may be able to use NR and Wi-Fi. Furthermore, the terminal device 30 may be able to use different types of cellular communication technology (e.g., LTE and NR). LTE and NR are types of cellular communication technology, and enable mobile communication of a terminal device by arranging a plurality of areas covered by a base station in a cell shape.

Note that, in the following description, "LTE" includes LTE-Advanced (LTE-A), LTE-Advanced Pro (LTE-A Pro), and evolved universal terrestrial radio access (EUTRA). Furthermore, NR includes new radio access technology (NRAT) and further EUTRA (FEUTRA). Note that a single base station may manage a plurality of cells. In the following description, a cell that supports LTE is referred to as an LTE cell, and a cell that supports NR is referred to as an NR cell.

NR is radio access technology of a next generation (fifth generation) of LTE (fourth generation communication including LTE-Advanced and LTE-Advanced Pro). NR is radio access technology that can support various use cases including enhanced mobile broadband (eMBB), massive machine type communications (mMTCs), and ultra-reliable and low latency communications (URLLCs). NR has been studied in 3GPP (registered trademark) aiming at a technical framework that supports utilization scenarios, requirement conditions, arrangement scenarios, and the like in these use cases.

Note that the wireless network may support radio access technology (RAT) such as long term evolution (LTE) and new radio (NR). LTE and NR are types of cellular communication technology, and enable mobile communication of a terminal device by arranging a plurality of areas covered by a base station in a cell shape. Note that a radio access method used by the communication system 2 is not limited to LTE and NR, and may include other radio access methods such as wideband code division multiple access (W-CDMA) and code division multiple access 2000 (cdma 2000).

Furthermore, a base station constituting the wireless network may be a ground station or a non-ground station. The non-ground station may be a satellite station or an aircraft station. When the non-ground station is a satellite station, the wireless network may be a bent-pipe (transparent) type mobile satellite communication system.

Note that, in the embodiment, the ground station (also referred to as ground base station) refers to a base station (including relay station) installed on the ground. Here, "on the ground" has a broad sense including not only on the land but in the ground, on water, and under water. Note that, in the following description, the description of "ground station" may be replaced with "gateway".

Note that a base station of LTE may be referred to as an evolved node B (eNodeB) or an eNB. Furthermore, a base station of NR may be referred to as a gNodeB or a gNB. Furthermore, in LTE and NR, a terminal device (also referred to as mobile station or terminal) may be referred to as user equipment (UE). Note that the terminal device is a type of communication device, and is also referred to as a mobile station or a terminal.

Note that a base station of LTE may be referred to as an evolved node B (eNodeB) or an eNB. Furthermore, a base station of NR may be referred to as a gNodeB or a gNB. Furthermore, in LTE and NR, a terminal device (also referred to as mobile station or terminal) may be referred to as user equipment (UE). Note that the terminal device 30 is a type of communication device, and is also referred to as a mobile station or a terminal.

Note that the terminal device 30 may be connectable to the network by using radio access technology (wireless communication method) other than LTE, NR, Wi-Fi, and Bluetooth. For example, the terminal device 30 may be connectable to the network by using low power wide area (LPWA) communication. Furthermore, the terminal device 30 may be connectable to the network by using wireless communication of a unique standard.

Here, the LPWA communication is wireless communication that enables low-power wide-range communication. For example, the LPWA radio is Internet of Things (IoT) wireless communication using specific low-power radio **(e.g.,** 920 MHz band) or an industry-science-medical (ISM) band. Note that the LPWA communication used by the terminal device 30 may conform to an LPWA standard. Examples of the LPWA standard include, for example, ELTRES, ZETA, SIGFOX, LoRaWAN, and NB-Iot. Of course, the LPWA standard is not limited thereto, and other LPWA standards may be used.

Note that the devices in the figure may be considered as devices in a logical sense. That is, parts of devices in the figure may be achieved by a virtual machine (VM), a container, a docker, and the like, and implemented on physically the same hardware.

In the embodiment, the concept of the communication device includes not only a portable moving object device (terminal device) such as a mobile terminal but a device installed in a structure or a moving object. The structure or the moving object itself may be regarded as a communication device. Furthermore, the concept of the communication device includes not only a terminal device but a base station and a relay station. The communication device is a type of processing device and information processing device. Furthermore, the communication device can be rephrased as a transmission device or a reception device.

Configurations of devices constituting the development system 1 and the communication system 2 will be specifically described below. Note that the configurations of the devices described below are merely examples. The configurations of the devices may be different from the following configurations.

<2-2. Configuration Example of Development Device>

First, a configuration of the development device 10 will be described.

The development device 10 is an information processing device (computer) for calculating setting information to be used by a communication device (e.g., terminal device 30) in the communication system 2. Here, the setting information relates to, for example, power feeding to the array antenna in the communication device. In this case, the setting information may include a set value regarding at least one of feeding power and a feeding phase of each of a plurality of feeding points of the array antenna.

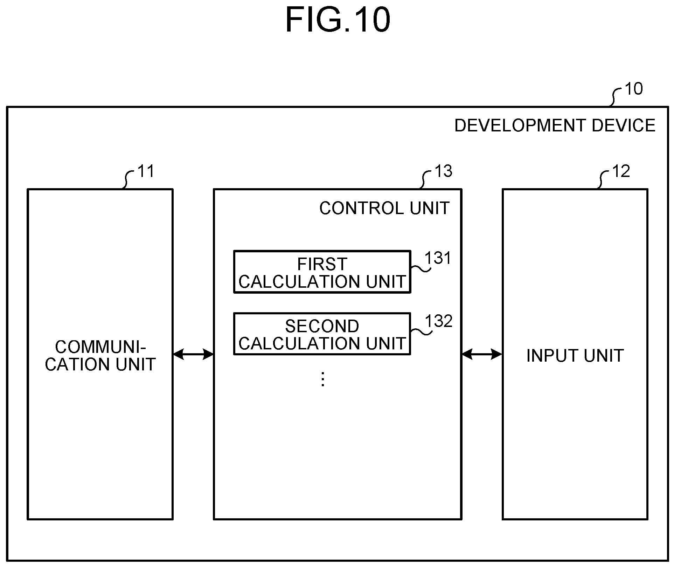

FIG. 10 illustrates a configuration example of the development device 10 according to the embodiment of the present disclosure. The development device 10 includes a communication unit 11, an input unit 12, and a control unit 13. Note that FIG. 10 illustrates a functional configuration, and a hardware configuration may be different from the configuration. Furthermore, the functions of the development device 10 may be statically or dynamically distributed and implemented in a plurality of physically separated configurations. For example, the development device 10 may include a plurality of server devices.

The communication unit 11 is a communication interface for communicating with another device. The communication unit 11 may be a network interface or an equipment connection interface. For example, the communication unit 11 may be a local area network (LAN) interface such as a network interface card (NIC), or may be a USB interface including a universal serial bus (USB) host controller, a USB port, and the like. Furthermore, the communication unit 11 may be a wired interface or a radio interface. The communication unit 11 functions as a communication means of the development device 10. The communication unit 11 communicates with the base station 20 and the like under the control of the control unit 13.

The input unit 12 is an input device that receives various inputs from the outside. For example, the input unit 12 may be a data input interface for inputting various pieces of data for electromagnetic field simulation. In the case, the data input interface may be an equipment connection interface such as a USB interface. Furthermore, the input unit 12 is an operation device for the user to perform various operations, such as a keyboard, a mouse, and an operation key.

The control unit 13 is a controller that controls each unit of the development device 10. The control unit 13 is implemented by a processor such as a central processing unit (CPU), a micro processing unit (MPU), and a graphics processing unit (GPU). For example, the control unit 13 is implemented by the processor executing various programs stored in a storage device inside the development device 10 by using a random access memory (RAM) or the like as a work area. Note that the control unit 13 may be implemented by an integrated circuit such as an application specific integrated circuit (ASIC) and a field programmable gate array (FPGA). Any of the CPU, the MPU, the GPU, the ASIC, and the FPGA can be regarded as a controller.

As illustrated in FIG. 10, the control unit 13 includes a first calculation unit 131 and a second calculation unit 132. Blocks (first calculation unit 131 to second calculation unit 132) constituting the control unit 13 are functional blocks each indicating a function of the control unit 13. These functional blocks may be software blocks or hardware blocks. For example, each of the above-described functional blocks may be one software module implemented by software (including microprogram), or may be one circuit block on a semiconductor chip (die). Of course, each functional block may be one processor or one integrated circuit. Any method of constituting such a functional block may be adopted. Note that the control unit 13 may include a functional unit different from the above-described functional blocks.

Note that the development device 10 may have a configuration other than the above. For example, the development device 10 may include a storage unit. The storage unit is a data readable/writable storage device such as a dynamic random access memory (DRAM), a static random access memory (SRAM), a flash memory, and a hard disk. The storage unit of the development device 10 may store, for example, a model (simulation model) of the housing structure of the terminal device 30 for electromagnetic field simulation.

<2-3. Configuration Example of Base Station>

Next, a configuration of the base station 20 will be described. The base station 20 can be rephrased as a base station (BS).

The base station 20 is a wireless communication device that wirelessly communicates with the terminal device 30. The base station 20 may wirelessly communicate with the terminal devices 30 via a relay station, or may wirelessly communicate with the terminal devices 30 directly.

The base station 20 is a type of communication device. More specifically, the base station 20 is a device corresponding to a wireless base station (e.g., base station, Node B, eNB, and gNB) or a radio access point. The base station 20 may be a wireless relay station. Furthermore, the base station 20 may be an optical extension device called a remote radio head (RRH) or a radio unit (RU). Furthermore, the base station 20 may be a reception station such as a field pickup unit (FPU). Furthermore, the base station 20 may be an integrated access and backhaul (IAB) donor node or an IAB relay node, which provide a radio access line and a wireless backhaul line by time division multiplexing, frequency division multiplexing, or spatial division multiplexing.

Note that the base station 20 may use cellular communication technology or wireless LAN technology as radio access technology. Of course, the radio access technology used by the base station 20 is not limited thereto. The base station 20 may use other radio access technology. For example, the base station 20 may use low power wide area (LPWA) communication technology as radio access technology.

Furthermore, the wireless communication used by the base station 20 may use a millimeter wave band (30 to 300 GHz band) or a quasi-millimeter wave band (e.g., 20 to 30 GHz band). Of course, the base station 20 may perform wireless communication using a frequency band (Sub6) of less than 6 GHz or other frequency bands (6 to 20 GHz bands).

In addition, the base station 20 may perform wireless communication using radio waves or wireless communication (optical radio) using infrared rays and visible light. Furthermore, the base station 20 may be able to perform non-orthogonal multiple access (NOMA) communication with the terminal device 30. Here, the NOMA communication refers to communication (transmission, reception, or both thereof) using non-orthogonal resources. Note that the base station 20 may be able to perform the NOMA communication with another base station 20.

Note that base stations 20 may be able to communicate with each other via an interface between a base station and a core network (e.g., NG interface and S1 interface). Any of a wired interface and a wireless interface may be used as the interface. Furthermore, the base stations may be able to communicate with each other via an interface between base stations (e.g., Xn interface, X2 interface, S1 interface, and F1 interface). Any of a wired interface and a wireless interface may be used as the interface.

Note that the concept of the base station includes not only a donor base station but a relay base station (also referred to as relay station). For example, the relay base station may be either one of an RF repeater, a smart repeater, and an intelligent surface. Furthermore, the concept of the base station includes not only a structure having a function of the base station but a device installed in the structure.

The structure includes a building such as a highrise building, a house, a steel tower, station facilities, airport facilities, harbor facilities, an office building, a school building, a hospital, a factory, commercial facilities, and a stadium. Note that the concept of the structure includes not only a building but a non-building structure such as a tunnel, a bridge, a dam, a wall, and an iron pillar and facilities such as a crane, a gate, and a windmill. Furthermore, the concept of the structure includes not only a structure on land (on ground in narrow sense) or in the ground but a structure on water such as a pier and a megafloat and a structure under water such as marine observation facilities. The base station can be rephrased as an information processing device.

The base station 20 may be a donor station or a relay station. Furthermore, the base station 20 may be a fixed station or a mobile station. The mobile station is a movable wireless communication device. In this case, the base station 20 may be a device installed in a moving object, or may be the moving object itself. For example, a relay station having mobility can be regarded as the base station 20 serving as a mobile station. Furthermore, a device originally having the mobility and mounted with a function (at least part of function of base station) of a base station, such as a vehicle, an unmanned aerial vehicle (UAV) represented by a drone, and a smartphone, also corresponds to the base station 20 serving as the mobile station.

Here, the moving object may be a mobile terminal such as a smartphone and a mobile phone. Furthermore, the moving object may be a moving object that moves on land (on ground in narrow sense) (e.g., vehicle such as automobile, bicycle, bus, truck, motorcycle, train, and linear motor car) or a moving object that moves in the ground (e.g., in tunnel) (e.g., subway). Furthermore, the moving object may be a moving object that moves on water (e.g., vessel such as passenger ship, cargo ship, and hovercraft) or a moving object that moves under water (e.g., submersible ship such as submersible, submarine, and unmanned submersible machine). Note that the moving object may be a moving object that moves in the atmosphere (e.g., aircraft such as airplane, airship, and drone).

Furthermore, the base station 20 may be a ground base station (ground station) installed on the ground. For example, the base station 20 may be disposed in a structure on the ground, or may be installed in a moving object that moves on the ground. More specifically, the base station 20 may be an antenna installed in a structure such as a building and a signal processing device connected to the antenna. Of course, the base station 20 may be a structure or a moving object itself. "On the ground" has a broad sense including not only on the land (on ground in narrow sense) but in the ground, on water, and under water. Note that the base station 20 is not limited to a ground base station. For example, when the communication system 2 is a satellite communication system, the base station 20 may be an aircraft station. As seen from a satellite station, an aircraft station located on the earth is a ground station.

Note that the base station 20 is not limited to a ground station. The base station 20 may be a non-ground base station (non-ground station) capable of floating in the air or space. For example, the base station 20 may be an aircraft station or a satellite station.

The satellite station can float outside the atmosphere. The satellite station may be a device mounted in a space moving object such as an artificial satellite, or may be a space moving object itself. The space moving object moves outside the atmosphere. Examples of the space moving object include an artificial celestial object such as an artificial satellite, a spacecraft, a space station, and a probe. Note that a satellite serving as a satellite station may be any of a low earth orbiting (LEO) satellite, a medium earth orbiting (MEO) satellite, a geostationary earth orbiting (GEO) satellite, and a highly elliptical orbiting (HEO) satellite. Of course, the satellite station may be a device mounted in a low earth orbiting satellite, a middle earth orbiting satellite, a geostationary earth orbiting satellite, or a highly elliptical orbiting satellite.

The aircraft station is a wireless communication device capable of floating in the atmosphere, such as an aircraft. The aircraft station may be a device mounted in an aircraft and the like, or may be an aircraft itself. Note that the concept of the aircraft includes not only a heavy aircraft such as an airplane and a glider but a light aircraft such as a balloon and an airship. Furthermore, the concept of the aircraft includes not only the heavy aircraft and the light aircraft but a rotorcraft such as a helicopter and an autogyro. Note that the aircraft station (or aircraft mounted with aircraft station) may be an unmanned aircraft such as a drone.

Note that the concept of the unmanned aircraft also includes an unmanned aircraft system (UAS) and a tethered unmanned aircraft system (tethered UAS). Furthermore, the concept of the unmanned aircraft includes a lighter than air (LTA) UAS and a heavier than air (HTA) UAS. In addition, the concept of the unmanned aircraft also includes a high altitude UAS platform (HAP).

The coverage of the base station 20 may be as large as a macro cell, or as small as a pico cell. Of course, the coverage of the base station 20 may be as extremely small as a femto cell. Furthermore, the base station 20 may have a beamforming capability. In this case, in the base station 20, a cell or a service area may be formed for each beam.

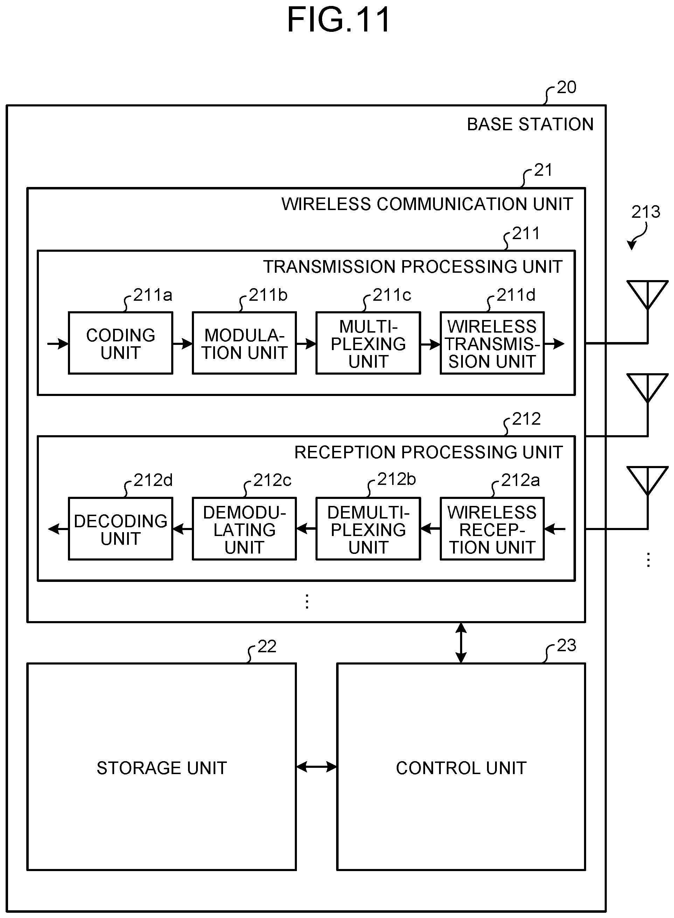

FIG. 11 illustrates a configuration example of the base station 20 according to the embodiment of the present disclosure. The base station 20 includes a wireless communication unit 21, a storage unit 22, and a control unit 23. Note that FIG. 11 illustrates a functional configuration, and the hardware configuration may be different from the configuration. Furthermore, the functions of the base station 20 may be distributed and implemented in a plurality of physically separated configurations.

The wireless communication unit 21 is a signal processing unit for wirelessly communicating with another wireless communication device (e.g., terminal device 30). The wireless communication unit 21 operates under the control of the control unit 23. The wireless communication unit 21 supports one or a plurality of radio access methods. For example, the wireless communication unit 21 supports both NR and LTE. The wireless communication unit 21 may support W-CDMA or cdma 2000 in addition to NR or LTE. Furthermore, the wireless communication unit 21 may support automatic retransmission technology such as hybrid automatic repeat request (HARQ).

The wireless communication unit 21 includes a transmission processing unit 211, a reception processing unit 212, and an antenna 213. The wireless communication unit 21 may include a plurality of transmission processing units 211, a plurality of reception processing units 212, and a plurality of antennas 213. Note that, when the wireless communication unit 21 supports a plurality of radio access methods, each unit of the wireless communication unit 21 can be configured individually for each radio access method. For example, the transmission processing unit 211 and the reception processing unit 212 may be configured individually by LTE and NR. Furthermore, the antenna 213 may include a plurality of antenna elements (e.g., plurality of patch antennas). In this case, the wireless communication unit 21 may be configured to be able to perform beamforming. The wireless communication unit 21 may be configured to be able to perform polarized wave beamforming using vertically polarized waves (V-polarized waves) and horizontally polarized waves (H-polarized waves).

The transmission processing unit 211 performs processing of transmitting downlink control information and downlink data. For example, the transmission processing unit 211 codes downlink control information and downlink data input from the control unit 23 by using a coding method such as block coding, convolutional coding, turbo coding, and the like. Here, in such coding, coding with a polar code and coding with a low density parity check (LDPC) code may be performed. Then, the transmission processing unit 211 modulates a coded bit by a predetermined modulation method such as BPSK, QPSK, 16 QAM, 64 QAM, and 256 QAM. In this case, signal points on a constellation is not necessarily required to be equidistant from each other. The constellation may be a non uniform constellation (NUC). Then, the transmission processing unit 211 multiplexes a modulation symbol of each channel and a downlink reference signal, and arranges the multiplexed modulation symbol and the downlink reference signal to a predetermined resource element. Then, the transmission processing unit 211 performs various pieces of signal processing on the multiplexed signal. For example, the transmission processing unit 211 performs processing such as conversion into a frequency domain by fast Fourier transform, addition of a guard interval (cyclic prefix), generation of a baseband digital signal, conversion into an analog signal, quadrature modulation, up-conversion, removal of an extra frequency component, and power amplification. A signal generated by the transmission processing unit 211 is transmitted from the antenna 213.

The reception processing unit 212 processes an uplink signal received via the antenna 213. For example, the reception processing unit 212 performs, on the uplink signal, down-conversion, removal of an unnecessary frequency component, control of an amplification level, quadrature demodulation, conversion into a digital signal, removal of a guard interval (cyclic prefix), extraction of a frequency domain signal by fast Fourier transform, and the like. Then, the reception processing unit 212 separates an uplink channel such as a physical uplink shared channel (PUSCH) and a physical uplink control channel (PUCCH) and an uplink reference signal from signals subjected to these pieces of processing. Furthermore, the reception processing unit 212 demodulates a reception signal by using a modulation method such as binary phase shift keying (BPSK) and quadrature phase shift keying (QPSK) for a modulation symbol of the uplink channel. The modulation method used in the demodulation may be 16 quadrature amplitude modulation (QAM), 64 QAM, or 256 QAM. In this case, signal points on a constellation is not necessarily required to be equidistant from each other. The constellation may be a non uniform constellation (NUC). Then, the reception processing unit 212 performs decoding processing on a demodulated coded bit of the uplink channel. Decoded uplink data and uplink control information are output to the control unit 23.

The antenna 213 is an antenna device (antenna unit) that mutually converts current and radio waves into each other. The antenna 213 may include one antenna element (e.g., one patch antenna), or may include a plurality of antenna elements (e.g., plurality of patch antennas). When the antenna 213 includes a plurality of antenna elements, the wireless communication unit 21 may be configured to be able to perform beamforming. For example, the wireless communication unit 21 may be configured to generate a directional beam by controlling the directivity of a wireless signal using a plurality of antenna elements. Note that the antenna 213 may be a dual-polarized wave antenna. When the antenna 213 is a dual-polarized wave antenna, the wireless communication unit 21 may use vertically polarized waves (V-polarized waves) and horizontally polarized waves (H-polarized waves) in transmitting a wireless signal. Then, the wireless communication unit 21 may control the directivity of the wireless signal transmitted by using the vertically polarized waves and the horizontally polarized waves. Furthermore, the wireless communication unit 21 may transmit and receive spatially multiplexed signals via a plurality of layers including a plurality of antenna elements. Note that the antenna 213 may have a configuration similar to the configuration of an antenna 313 of the terminal device 30.

The storage unit 22 is a data readable/writable storage device such as a DRAM, an SRAM, a flash memory, and a hard disk. The storage unit 22 functions as a storage means of the base station 20.

The control unit 23 is a controller that controls each unit of the base station 20. The control unit 23 is implemented by a processor such as a CPU and an MPU. For example, the control unit 23 is implemented by a processor executing various programs stored in a storage device inside the base station 20 by using a RAM and the like as a work area. Note that the control unit 23 may be implemented by an integrated circuit such as an ASIC and an FPGA. All of the CPU, the MPU, the ASIC, and the FPGA can be regarded as controllers. Furthermore, the control unit 23 may be implemented by a GPU in addition to or instead of the CPU. Note that the control unit 23 may operate in the same manner as each block of the control unit 13 of the development device 10 operates. Furthermore, the control unit 23 may operate in the same manner as each block of a control unit 33 of the terminal device 30 operates.

In the embodiment, the concept of the base station may include an assembly of a plurality of physical or logical devices. For example, in the embodiment, the base station may be distinguished into a plurality of devices such as a baseband unit (BBU) and a radio unit (RU). Then, the base station may be interpreted as an assembly of the plurality of devices. Furthermore, the base station may be either or both of the BBU and the RU. The BBU and the RU may be connected by a predetermined interface (e.g., enhanced common public radio interface (eCPRI)). Note that the RU may be rephrased as a remote radio unit (RRU) or a radio dot (RD). Furthermore, the RU may correspond to a gNB distributed unit (gNB-DU) to be described later. Moreover, the BBU may correspond to a gNB central unit (gNB-CU). Furthermore, the RU may be a wireless device connected to the gNB-DU to be described later. The gNB-CU, the gNB-DU, and the RU connected to the gNB-DU may conform to an open radio access network (O-RAN). Moreover, the RU may be a device integrated with an antenna. An antenna (e.g., antenna integrated with RU) of the base station may adopt an advanced antenna system, and support MIMO (e.g., FD-MIMO) and beamforming. Furthermore, the antenna of the base station may include, for example, 64 transmission antenna ports and 64 reception antenna ports.

Furthermore, the antenna mounted on the RU may be an antenna panel including one or more antenna elements. The RU may be mounted with one or more antenna panels. For example, the RU may be mounted with two types of antenna panels including an antenna panel of horizontally polarized waves and an antenna panel of vertically polarized waves or two types of antenna panels including an antenna panel of a right-handed circularly polarized waves and an antenna panel of left-handed circularly polarized waves. Furthermore, the RU may form and control an independent beam for each antenna panel.

Note that a plurality of base stations may be connected to each other. One or a plurality of base stations may be included in a radio access network (RAN). In this case, the base station may be simply referred to as a RAN, a RAN node, an access network (AN), or an AN node. Note that a RAN in LTE may be called an enhanced universal terrestrial RAN (EUTRAN). Furthermore, a RAN in NR may be called as an NGRAN. Furthermore, a RAN in W-CDMA (UMTS) may be called a UTRAN.

Note that a base station of LTE may be referred to as an evolved node B (eNodeB) or an eNB. In this case, the EUTRAN includes one or a plurality of eNodeBs (eNBs). Furthermore, a base station of NR may be referred to as a gNodeB or a gNB. In this case, the NGRAN includes one or a plurality of gNBs. The EUTRAN may include a gNB (en-gNB) connected to a core network in an LTE communication system (EPS) (EPC). Similarly, the NGRAN may include an ng-eNB connected to a core network 5GC in a 5G communications system (5GS).

Note that, when the base station is an eNB, a gNB, or the like, the base station may be referred to as a 3GPP access. Furthermore, when the base station is a radio access point, the base station may be referred to as a non-3GPP access. Moreover, the base station may be an optical extension device called a remote radio head (RRH) or a radio unit (RU). Furthermore, when the base station is a gNB, the base station may be obtained by combining the gNB-CU and the gNB-DU described above, or may be either of the gNB-CU and the gNB-DU.

Here, for communication with UE, the gNB-CU hosts a plurality of upper layers (e.g., radio resource control (RRC), service data adaptation protocol (SDAP), and packet data convergence protocol (PDCP)) among access strata. In contrast, the gNB-DU hosts a plurality of lower layers (e.g., radio link control (RLC), medium access control (MAC), and physical layer (PHY)) among the access strata. That is, among messages/information to be described later, RRC signaling (semi-static notification) may be generated by the gNB-CU while MAC CE and DCI (dynamic notification) may be generated by the gNB-DU. Alternatively, among RRC configurations (semi-static notifications), for example, some configurations such as IE: cellGroupConfig may be generated by the gNB-DU, and the remaining configurations may be generated by the gNB-CU. These configurations may be transmitted and received through an F1 interface to be described later.

Note that the base station may be configured to be able to communicate with another base station. For example, when a plurality of base stations is obtained by combining eNBs or an eNB and an en-gNB, the base stations may be connected with each other by an X2 interface. Furthermore, when the plurality of base stations is obtained by combining gNBs or a gn-eNB and a gNB, the devices may be connected with each other by an Xn interface. Furthermore, when the plurality of base stations is obtained by combining a gNB-CU and a gNB-DU, the devices may be connected with each other by the above-described F1 interface. A message/information (e.g., RRC signaling, MAC control element (MAC CE), and DCI) to be described later may be transmitted between a plurality of base stations via, for example, the X2 interface, the Xn interface, or the F1 interface.

A cell provided by the base station may be called a serving cell. The concept of the serving cell includes a primary cell (PCell) and a secondary cell (SCell). When dual connectivity is set for UE (e.g., terminal device 30), the PCell provided by a master node (MN) and zero or one or more SCells may be called a master cell group. Examples of the dual connectivity include EUTRA-EUTRA dual connectivity, EUTRA-NR dual connectivity (ENDC), EUTRA-NR dual connectivity with 5GC, NR-EUTRA dual connectivity (NEDC), and NR-NR dual connectivity.

Note that the serving cell may include a primary secondary cell or a primary SCG cell (PSCell). When the dual connectivity is set for UE, a PSCell provided by a secondary node (SN) and zero or one or more SCells may be called a secondary cell group (SCG). Unless a special setting (e.g., PUCCH on SCell) is made, a physical uplink control channel (PUCCH) is transmitted in the PCell and the PSCell, but is not transmitted in the SCell. Furthermore, a radio link failure is also detected in the PCell and the PSCell, but is not detected in the SCell (is not required to be detected). As described above, the PCell and the PSCell have special roles in the serving cell, and thus are also called special cells (SpCells).

One downlink component carrier and one uplink component carrier may be associated with one cell. Furthermore, a system bandwidth for one cell may be divided into a plurality of bandwidth parts (BWPs). In this case, one or a plurality of BWPs may be set to UE, and the UE may use one BWP as an active BWP. Furthermore, wireless resources (e.g., frequency band, numerology (subcarrier spacing), and slot format (slot configuration)) that can be used by the terminal device 30 may be different for each cell, each component carrier, or each BWP.

<2-4. Configuration Example of Terminal Device>

Next, the configuration of the terminal device 30 will be described. The terminal device 30 can be rephrased as user equipment (UE).

The terminal device 30 is a wireless communication device that wirelessly communicates with another communication device such as the base station 20. The terminal device 30 is, for example, a mobile phone, a smart device (smartphone or tablet), a personal digital assistant (PDA), and a personal computer. Furthermore, the terminal device 30 may be equipment such as a business camera having a communication function, or may be a motorcycle, a moving relay vehicle, or the like mounted with communication equipment such as a field pickup unit (FPU). Furthermore, the terminal device 30 may be an industrial robot having a communication function. Furthermore, the terminal device 30 may be a machine to machine (M2M) device or an Internet of Things (IoT) device.

Note that the terminal device 30 may be able to perform the NOMA communication with the base station 20. Furthermore, the terminal device 30 may be able to use automatic retransmission technology such as HARQ at the time of communicating with the base station 20. The terminal device 30 may be able to perform sidelink communication with another terminal device 30. The terminal device 30 may be able to use the automatic retransmission technology such as HARQ at the time of performing the sidelink communication. Note that the terminal device 30 may also be able to perform the NOMA communication in communication (sidelink) with another terminal device 30.

Furthermore, the terminal device 30 may be able to perform LPWA communication with another communication device (e.g., base station 20 and another terminal device 30). Furthermore, the terminal device 30 may use wireless communication using a quasi-millimeter wave band or a millimeter wave band. Furthermore, the base station 20 may perform wireless communication using a frequency band (Sub6) of less than 6 GHz or other frequency bands (6 to 20 GHz bands). Furthermore, the terminal device 30 may use wireless communication (including sidelink communication) using radio waves, or may use wireless communication (optical radio) using infrared rays and visible light.

Furthermore, the terminal device 30 may be a moving object device. The moving object device is a movable wireless communication device. In this case, the terminal device 30 may be a wireless communication device installed in a moving object, or may be a moving object itself. For example, the terminal device 30 may be a vehicle that moves on a road, such as an automobile, a bus, a truck, and a motorcycle, a vehicle that moves on a rail installed in a track, such as a train, or a wireless communication device mounted on the vehicle. Note that the moving object may be a mobile terminal, or may be a moving object that moves on land (on ground in narrow sense), in the ground, on water, or under water. Furthermore, the moving object may be a moving object that moves in the atmosphere, such as a drone and a helicopter, or may be a moving object that moves outside the atmosphere, such as an artificial satellite.

The terminal device 30 may be simultaneously connected to a plurality of base stations or a plurality of cells to perform communication. For example, when one base station supports a communication area via a plurality of cells (e.g., pCell and sCell), the plurality of cells is bundled by carrier aggregation (CA) technology, dual connectivity (DC) technology, or multi-connectivity (MC) technology to enable communication between the base stations 20 and the terminal device 30. Alternatively, the terminal device 30 can communicate with the plurality of base stations 20 by coordinated multi-point transmission and reception (CoMP) technology via cells of different base stations 20.

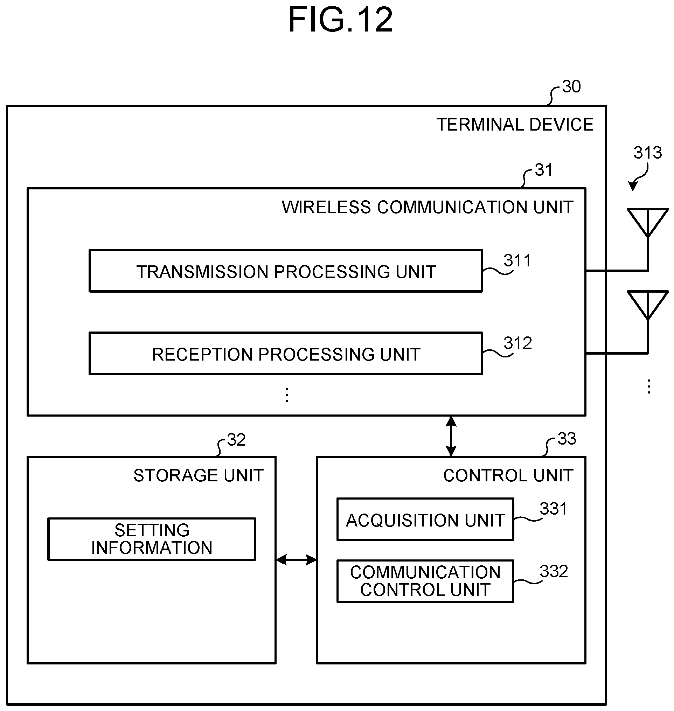

FIG. 12 illustrates a configuration example of the terminal device 30 according to the embodiment of the present disclosure. The terminal device 30 includes a wireless communication unit 31, a storage unit 32, and a control unit 33. Note that FIG. 12 illustrates a functional configuration, and the hardware configuration may be different from the configuration. Furthermore, the functions of the terminal device 30 may be dispersively implemented in a plurality of physically separated configurations.

The wireless communication unit 31 is a signal processing unit for wirelessly communicating with another wireless communication device (e.g., base station 20 and another terminal device 30). The wireless communication unit 31 operates under the control of the control unit 33. The wireless communication unit 31 includes a transmission processing unit 311, a reception processing unit 312, and the antenna 313. The wireless communication unit 31, the transmission processing unit 311, the reception processing unit 312, and the antenna 313 may have configurations similar to those of the wireless communication unit 21, the transmission processing unit 211, the reception processing unit 212, and the antenna 213 of the base station 20. Furthermore, the wireless communication unit 31 may be configured to be able to perform beamforming similarly to the wireless communication unit 21. Moreover, the wireless communication unit 31 may be configured to be able to transmit and receive spatially multiplexed signals similarly to the wireless communication unit 21.

The storage unit 32 is a data readable/writable storage device such as a DRAM, an SRAM, a flash memory, and a hard disk. The storage unit 32 functions as a storage means of the terminal device 30.

The control unit 33 is a controller that controls each unit of the terminal device 30. The control unit 33 is implemented by a processor such as a CPU and an MPU. For example, the control unit 33 is implemented by a processor executing various programs stored in a storage device inside the terminal device 30 by using a RAM and the like as a work area. Note that the control unit 33 may be implemented by an integrated circuit such as an ASIC and an FPGA. All of the CPU, the MPU, the ASIC, and the FPGA can be regarded as controllers. Furthermore, the control unit 33 may be implemented by a GPU in addition to or instead of the CPU.

As illustrated in FIG. 12, the control unit 33 includes an acquisition unit 331 and a communication control unit 332. Each block (acquisition unit 331 to communication control unit 332) constituting the control unit 13 is a functional block indicating a function of the control unit 13. These functional blocks may be software blocks or hardware blocks. For example, each of the above-described functional blocks may be one software module implemented by software (including microprogram), or may be one circuit block on a semiconductor chip (die). Of course, each functional block may be one processor or one integrated circuit. Any method of constituting such a functional block may be adopted. Note that the control unit 13 may include a functional unit different from the above-described functional blocks. Note that the control unit 33 may operate in the same manner as each of the blocks (first calculation unit 131 to second calculation unit 132) of the control unit 13 of the development device 10 operates.

<2-5. Configuration Example of Antenna>

Next, a configuration of an antenna in the communication device of the embodiment will be described. In the following description, a configuration of the antenna 313 of the terminal device 30 will be described as a configuration of an antenna in the communication device. Note that the configuration of the antenna described below can be applied to the antenna 213 of the base station 20.

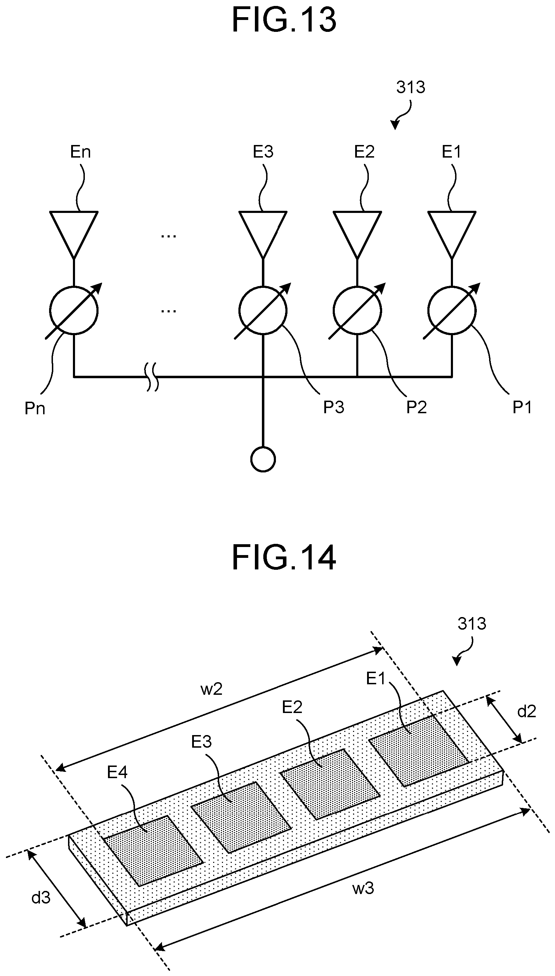

FIG. 13 illustrates a circuit configuration of the antenna 313. FIG. 13 illustrates a phased array antenna as a configuration example of the antenna 313. The antenna 313 includes a plurality of antenna elements E1 to En and a plurality of phase shifters P1 to Pn. Note that the phase shifters P1 to Pn may be regarded not as configurations of the antenna 313 but as configurations of the wireless communication unit 21. The wireless communication unit 21 in the terminal device 30 forms a directional beam by controlling the phases of the plurality of antenna elements E1 to En with the phase shifters P1 to Pn.

FIG. 14 illustrates a configuration example of the antenna 313. FIG. 14 illustrates a one-dimensional array antenna (linear array antenna), in which a plurality of antenna elements is one-dimensionally arrayed, as the configuration example of the antenna 313. In an example of FIG. 14, four antenna elements E1 to E4 are arranged in a line in a region of length d2 × width w2 (depth d2 × breadth w2) on a substrate.

Note that, in the embodiment, a size of the array antenna refers to a size of a region where the antenna elements are arranged. In an example of FIG. 14, the size of the region of length d2 × width w2 is the size of the array antenna. Note that, if the array antenna is modularized, the size of the module may be regarded as the size of the array antenna. In the example of FIG. 14, the size of a region of length d3 × width w3 (depth d3 × width w3) may be regarded as the size of the array antenna.

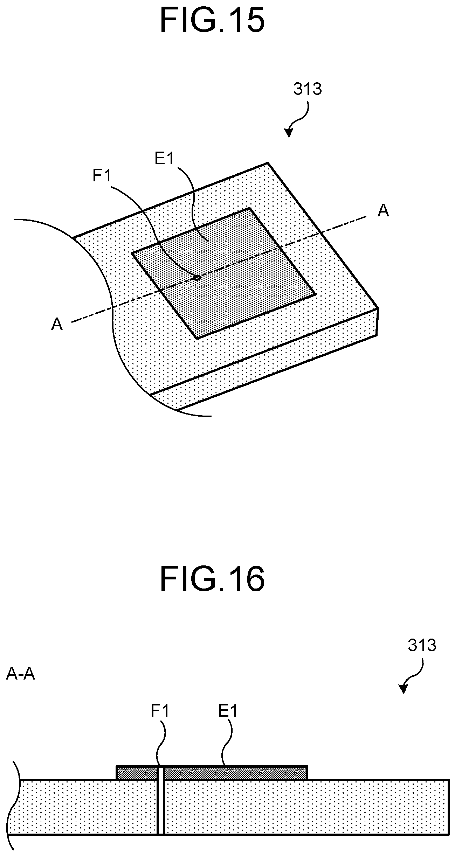

FIG. 15 illustrates a configuration example of the antenna 313. FIG. 15 illustrates a patch antenna as the configuration example of the antenna 313. In an example of FIG. 15, only a part of the antenna 313 is illustrated. The patch antenna is a rectangular microstrip antenna. The patch antenna includes an antenna element (patch) disposed on a dielectric substrate having a ground plane on the back surface. FIG. 15 illustrates an arrangement example of a feeding point F1. The feeding point is a feeding position of the antenna element (patch). FIG. 16 is a cross-sectional view taken along line A-A in FIG. 15. As illustrated in FIG. 16, the wireless communication unit 21 may feed power to the patch from behind the patch antenna. Note that a method of feeding power is not limited to the method in FIG. 16. Other methods may be adopted. Furthermore, although, in the example of FIG. 15, one feeding point is arranged in one antenna element (patch), a plurality of feeding points may be arranged in one antenna element (patch).

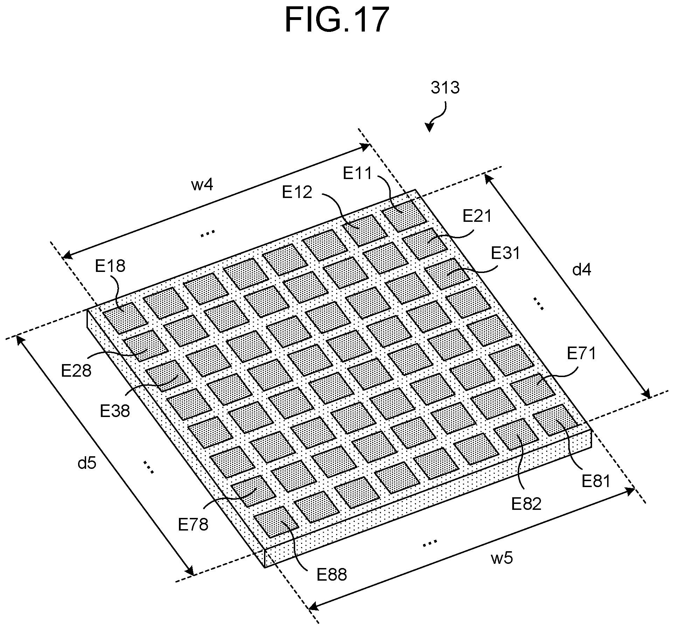

Note that the antenna 313 is not limited to the one-dimensional array antenna (linear array antenna). FIG. 17 illustrates another configuration example of the antenna 313. FIG. 17 illustrates a two-dimensional array antenna (planar array antenna), in which a plurality of antenna elements is two-dimensionally arrayed, as the configuration example of the antenna 313. In an example of FIG. 17, 64 of 8 × 8 of antenna elements E11 to E88 are arranged in a matrix in a region of length d4 × width w4 (depth d4 × breadth w4) on a substrate. Note that the plurality of antenna elements is not limited to being arranged in a matrix (arrayed in quadrangle). For example, the plurality of antenna elements may be arrayed in a triangle.

As described above, a size of the array antenna refers to a size of a region where the antenna elements are arranged. In the example of FIG. 17, the size of a region of length d4 × width w4 is the size of the array antenna. Note that, if the array antenna is modularized, the size of a portion including a dielectric substrate may be regarded as the size of the array antenna. In the example of FIG. 17, the size of a region of length d5 × width w5 (depth d5 × breadth w5) may be regarded as the size of the array antenna.

In the following description, the size of a region where the antenna elements are arranged may be referred to as the size of the antenna array. The word "array antenna" in the following description can be appropriately replaced with an "antenna array". Furthermore, the word "antenna array" in the following description can be appropriately replaced with an "array antenna".

The configuration of the antenna described above is merely an example. The configuration of the antenna in the communication device of the embodiment is not limited to the above-described example. For example, a number other than 4 or 64 of antenna elements may be provided in an array antenna. For example, a number within a range of 2 to 64 of antenna elements may be provided. Of course, more than 64 antenna elements may be provided. Furthermore, the antenna elements are not limited to patch antennas.

<<3. Operations of Development System and Communication System>>

The configurations of the development system 1 and the communication system 2 have been described above. Next, operations of the development system 1 and the communication system 2 having such configurations will be described.

<3-1. First Embodiment>

First, operations of a development system 1 and a communication system 2 according to a first embodiment will be described.

The development system 1 is used for developing a communication device (e.g., terminal device 30) constituting the communication system 2. As described above, the communication device includes an array antenna, and feeds power to the array antenna based on setting information on power feeding to the array antenna. The development system 1 determines the setting information to be used by the communication device.

The setting information includes a set value regarding at least one of feeding power and a feeding phase of each of a plurality of feeding points of the array antenna. In the first embodiment, the setting information optimized by the development system 1 includes set values of feeding phases of the plurality of feeding points of the array antenna. The set values of the feeding phases are set independently for the feeding points (for antenna ports).

As described above, the development system 1 optimizes the setting information on power feeding to the array antenna in consideration of not only EIRP but power density. More specifically, the development system 1 calculates the EIRP of the array antenna and the power density at a predetermined legally regulated area average while changing the setting regarding the power feeding to the array antenna. Then, the development system 1 calculates the setting information regarding power feeding to the array antenna (optimum value of feeding phase) by applying the calculated value to an evaluation criterion (first evaluation criterion). The evaluation criterion is, for example, an optimization evaluation function based on the EIRP and the power density at a predetermined legally regulated area average.

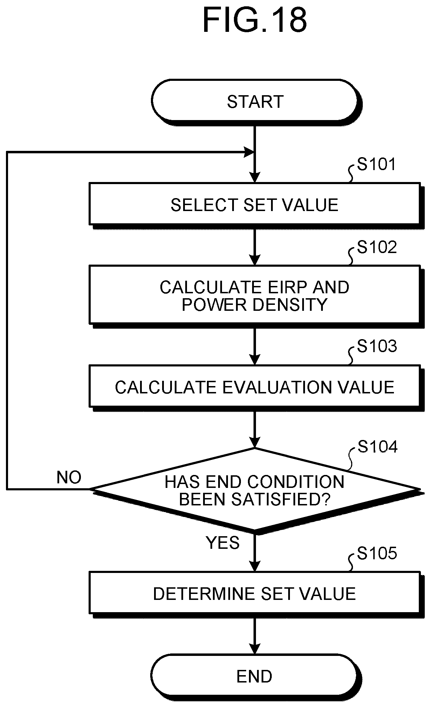

FIG. 18 is a flowchart illustrating optimization processing according to the first embodiment. A control unit 13 in a development device 10 of the development system 1 executes the optimization processing in FIG. 18. Note that a developer of the communication device models a housing structure of the communication device before executing the optimization processing. In the following description, the model of the housing structure may be referred to as a simulation model. The optimization processing will be described below with reference to the flowchart of FIG. 18.

First, a first calculation unit 131 of the control unit 13 selects one combination of set values of feeding phases of a plurality of feeding points from possible combinations (Step S101). In the following description, the combination of set values of feeding phases of a plurality of feeding points may be simply referred to as a set value of a feeding phase. Note that, in the first embodiment, set values of pieces of feeding power of the plurality of feeding points are determined by hardware. The set values of pieces of feeding power may be fixed. In the first embodiment, the set values of pieces of feeding power may be the same as each other at all feeding points.

Next, the first calculation unit 131 calculates EIRP of the array antenna and power density at a predetermined legally regulated area average (Step S102). For example, the first calculation unit 131 calculates the EIRP and the power density at a predetermined legally regulated area average by performing electromagnetic field simulation based on a simulation model. The power density at a predetermined legally regulated area average is, for example, an average power density in an average frame C. In the following description, the power density at a predetermined legally regulated area average may be simply referred to as power density.

Next, a second calculation unit 132 calculates an evaluation value of the set value selected in Step S101 by applying the values (EIRP and power density) calculated in Step S102 to an optimization evaluation function (Step S103). The optimization evaluation function is used for evaluating a control result in a case where the array antenna is controlled by using the set value selected in Step S101.

In the optimization evaluation function used in the embodiment, not only the EIRP but the power density at a predetermined legally regulated area average are considered as elements. For example, the second calculation unit 132 uses a function in Expression (1) below as an optimization evaluation function. In an example of Expression (1), Score is an evaluation value.

$$\mathrm{Score} = 2 \times \mathrm{Pe} - \mathrm{Pb} \qquad\qquad (1)$$

Here, Pe is the EIRP calculated in Step S102, and dBm is used as a unit thereof. For example, Pe is a combined EIRP value calculated by setting Power/Phase of each feeding point in a simulation model. Here, Phase is the set value of the feeding phase selected in Step S101, and deg is used as a unit thereof. For example, Phase is a phase parameter set to each antenna port. Phase is set independently for each antenna port. Furthermore, Power is a set value of feeding power, and W is used as a unit thereof. For example, Power is power fed to each antenna port, and is determined by hardware.

Furthermore, Pb is a power backoff value for satisfying a legal regulation, and dBm is used as a unit thereof. Pb is calculated by, for example, Expression (2) below.

$$Pb = 10 \times log ((PDreg - PDsim)/10) \qquad (2)$$

Here, PDreg is a legally regulated power density, and $W/m^2$ is used as a unit thereof. In a case of the Radio Law of Japan, PDreg is 20 $W/m^2$ (= 2 $mW/cm^2$). PDreg has different values in different legal regulations.

Furthermore, PDsim is the power density calculated in Step S102, and $W/m^2$ is used as a unit thereof. For example, PDsim is power density calculated by setting Power/Phase in a simulation model, determining a Poynting vector, and averaging the Poynting vector with a legally regulated area. As described above, Phase is the set value of the feeding phase selected in Step S101, and deg is used as a unit thereof. Furthermore, Power is a set value of feeding power, and W is used as a unit thereof.

Note that the optimization evaluation function in Expression (1) indicates a value on the horizontal axis + a value on the vertical axis of a graph in FIG. 7. That is, since the peak EIRP on the horizontal axis is indicated by Pe and the backoff EIRP on the vertical axis is indicated by Pe-Pb, $2 \times$ Pe - Pb is established by Pe + (Pe - Pb) in Expression (1). In the first embodiment, in order to maximize the value, the set value is optimized.

The second calculation unit 132 calculates the evaluation value by applying the value (EIRP and power density) calculated in Step S102 to the optimization evaluation function in Expression (1) above. Then, the second calculation unit 132 stores the calculated evaluation value in a storage unit in association with the set value selected in Step S101. Note that the optimization evaluation function in Expression (1) is merely an example. The optimization evaluation function is not limited to the example.

Subsequently, the second calculation unit 132 determines whether an end condition of the optimization processing has been satisfied (Step S104). For example, the second calculation unit 132 determines whether evaluation values of all possible set values have been calculated. When the end condition has not been satisfied (Step S104: No), the control unit 13 returns the processing to Step S101. The control unit 13 repeats the processing of Steps S101 to S104 until the end condition is satisfied. That is, the control unit 13 repeats the calculation of the EIRP and the power density and the calculation of the evaluation value while changing the set value of the feeding phase.

When the end condition has been satisfied (Step S104: Yes), the second calculation unit 132 determines the optimum value of the set value as a set value for controlling the array antenna (Step S105). For example, the second calculation unit 132 determines the set value of the feeding phase having the highest evaluation value as the set value for the terminal device 30 to control the array antenna.

Note that, an example in which a brute-force approach is used for possible combinations of set values has been described above. In this case, there are a huge number of combinations, such as approximately one million combinations, are generated. Therefore, it takes a long time to optimize the setting information. Thus, in the processing of Steps S101 to S104, the control unit 13 may reduce the calculation amount by using Bayesian optimization instead of the brute-force approach.

After determining a set value, the control unit 13 ends the optimization processing.

The communication device (e.g., terminal device 30) constituting the communication system 2 stores setting information for controlling the array antenna, including the set value determined in Step S105. Then, the communication device controls the array antenna based on the stored setting information.

According to the first embodiment, the development device 10 determines the setting information in consideration of not only EIRP but power density at a predetermined legally regulated area average. Therefore, the communication device can exhibit high communication performance in a condition satisfying a power density regulation. The communication device controls the array antenna based on the setting information determined in such a manner. Therefore, the communication device can exhibit high communication performance while satisfying the power density regulation.

<3-2. Second Embodiment>

Next, operations of a development system 1 and a communication system 2 according to a second embodiment will be described.

An average frame C may be smaller in size than an array antenna. For example, in the Radio Law of Japan, the average frame C has an area of 1 $cm^2$ at 30 GHz or more. In contrast, in order to narrow down the characteristics of beamforming, the array antenna needs a size of approximately 20 mm even at 30 GHz or more. This results in a condition that the average frame C is smaller in size than the antenna array. In this case, a power density peak can be reduced while keeping total power by adjusting power of each antenna port. As a result, the EIRP under the condition that satisfies the power density regulation can be improved.

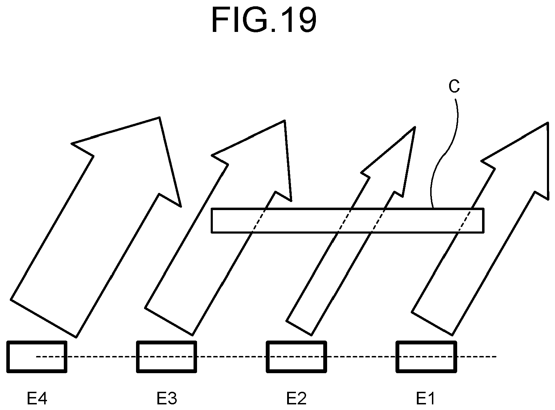

FIG. 19 outlines the operation of a communication device according to the second embodiment. In the second embodiment, the communication device decreases power to a central antenna element having a large contribution to a power density peak, and increases power to an outer antenna element (antenna element located at edge). This conceivably enables the communication device to reduce the maximum value of the power density while keeping the total power and the EIRP. In particular, in a case of tilt beams as illustrated in FIG. 19, allocating a large amount of power to the outside is effective.

Hereinafter, the optimization processing according to the second embodiment will be described. As described above, the setting information includes a set value regarding at least one of feeding power and a feeding phase of each of a plurality of feeding points of the array antenna. In the second embodiment, the setting information optimized by the development system 1 includes both the set value of the feeding phase and the set value of the feeding power. In the second embodiment, the set value of the feeding power is set independently for the feeding points (for antenna ports).

As described above, the development system 1 optimizes the setting information on power feeding to the array antenna in consideration of not only EIRP but power density. More specifically, the development system 1 calculates the EIRP of the array antenna and the power density at a predetermined legally regulated area average while changing the setting regarding the power feeding to the array antenna. Then, the development system 1 calculates the setting information regarding power feeding to the array antenna (optimum value of feeding power) by applying the calculated value to an evaluation criterion (second evaluation criterion). The evaluation criterion is, for example, an optimization evaluation function based on the EIRP and the power density at a predetermined legally regulated area average.

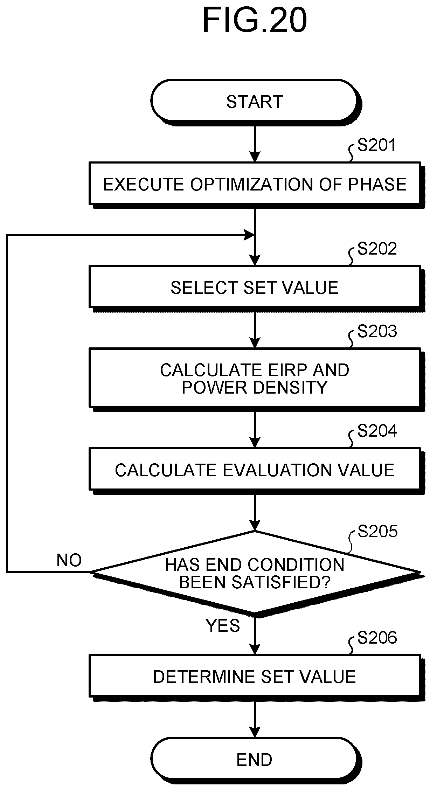

FIG. 20 is a flowchart illustrating optimization processing according to the second embodiment. A control unit 13 in a development device 10 of the development system 1 executes the optimization processing in FIG. 20. Note that a developer of the communication device models a housing structure of the communication device before executing the optimization processing. In the second embodiment, the array antenna is smaller in size than the average frame C. For example, the average frame C has a size of length d1 × width w1 as illustrated in FIG. 3, for example. The array antenna has a size of length d4 × width w4 (alternatively, length d5 × width w5) as illustrated in FIG. 17, for example. In this case, at least one of a length size and a width size of the array antenna is smaller than the length size or the width size of the average frame C. Of course, both the length size and the width size of the array antenna may be smaller than the length size or the width size of the average frame C. In the following description, the model of the housing structure may be referred to as a simulation model. The optimization processing will be described below with reference to the flowchart of FIG. 20.

First, the control unit 13 executes the optimization processing described in the first embodiment to calculate a set value of a feeding phase of each of the plurality of feeding points (Step S201). The set value of the feeding phase calculated here is an optimum value of the feeding phase calculated by applying the EIRP and the power density calculated while changing the feeding phase to the first evaluation criterion.

Subsequently, a first calculation unit 131 of the control unit 13 selects one combination of set values of pieces of feeding power of a plurality of feeding points from possible combinations (Step S202). Here, the first calculation unit 131 may select a combination of set values of pieces of feeding power such that the sum of pieces of power fed to feeding points (antenna ports) is the same as the sum at the time of equal power feeding. Here, the time of equal power feeding refers to a time when the same level of power is fed to each feeding point (antenna port) as in the first embodiment. In the following description, the combination of set values of pieces of feeding power of a plurality of feeding points may be simply referred to as a set value of feeding power.

Next, the first calculation unit 131 calculates EIRP of the array antenna and power density at a predetermined legally regulated area average (Step S203). For example, the first calculation unit 131 calculates the EIRP and the power density at a predetermined legally regulated area average (hereinafter, simply referred to as power density) by performing electromagnetic field simulation based on a simulation model. Note that, when the EIRP calculated here falls below the EIRP at the time of equal power feeding, the first calculation unit 131 may return the processing to Step S202 without advancing the processing to Step S204, and select another set value of feeding power.

Next, a second calculation unit 132 calculates an evaluation value of the set value selected in Step S202 by applying the values (EIRP and power density) calculated in Step S203 to an optimization evaluation function (Step S204). The optimization evaluation function is used for evaluating a control result in a case where the array antenna is controlled by using the set value selected in Step S202.

In the optimization evaluation function used in the embodiment, not only the EIRP but the power density at a predetermined legally regulated area average are considered as elements. For example, the second calculation unit 132 uses a function in Expression (3) below as an optimization evaluation function. In an example of Expression (3), Score is an evaluation value. In the second embodiment, in order to maximize the evaluation value, the set value is optimized.

$$\text{Score} = \text{EIRPgain} + \text{PDgain} \qquad\qquad (3)$$

Here, EIRPgain is a gain of EIRP under power control, and dBm is used as a unit thereof. Pb is calculated by, for example, Expression (4) below.

$$EIRPgain = EIRP2 - EIRP1 \qquad (4)$$

Here, EIRP1 is EIRP without power control, and dBm is used as a unit thereof. Furthermore, EIRP2 is EIRP under power control, and dBm is used as a unit thereof.

Furthermore, PDgain is a PD backoff reduction gain under power control, and dBm is used as a unit thereof. PDgain is calculated by, for example, Expression (5) below.

$$EIRPgain = 10 \times log (PD1/PD2) \qquad (5)$$

Here, PD1 is PD (power density) without power control, and dBm is used as a unit thereof. Furthermore, PD2 is PD (power density) under power control, and dBm is used as a unit thereof.

Note that, in calculating an evaluation value, a condition under which the EIRP calculated in Step S203 falls below the EIRP at the time of equal power feeding may be invalidated. That is, in calculating the evaluation value using Expression (3), the second calculation unit 132 may discard a set value (or calculation result of evaluation value) satisfying EIRP2 < EIRP1.

Furthermore, in calculating the evaluation value, the sum of pieces of power fed to feeding points (antenna ports) may be the same as the sum at the time of equal power feeding. That is, in calculating the evaluation value by using Expression (3), the second calculation unit 132 may discard a set value (or calculation result of evaluation value) in which the sum of pieces of power fed to feeding points (antenna ports) is not the same as the sum at the time of equal power feeding.

The second calculation unit 132 calculates the evaluation value by applying the value (EIRP and power density) calculated in Step S203 to the optimization evaluation function in Expression (3) above. Then, the second calculation unit 132 stores the calculated evaluation value in a storage unit in association with the set value selected in Step S202. Note that the optimization evaluation function in Expression (3) is merely an example. The optimization evaluation function is not limited to the example.

Subsequently, the second calculation unit 132 determines whether an end condition of the optimization processing has been satisfied (Step S205). For example, the second calculation unit 132 determines whether evaluation values of all possible set values have been calculated. When the end condition has not been satisfied (Step S205: No), the control unit 13 returns the processing to Step S202. The control unit 13 repeats the processing of Steps S202 to S205 until the end condition is satisfied. That is, the control unit 13 repeats the calculation of the EIRP and the power density and the calculation of the evaluation value while changing the set value of the feeding power.

When the end condition has been satisfied (Step S205: Yes), the second calculation unit 132 determines the optimum value of the set value as a set value for controlling the array antenna (Step S206). For example, the second calculation unit 132 determines the set value of the feeding phase having the highest evaluation value as the set value for the terminal device 30 to control the array antenna. The set value of the feeding power determined here may be calculated such that the feeding power to an antenna element located at the edge of the array antenna is larger than the feeding power to an antenna element located at a central portion of the array antenna.

Note that, in the processing of Steps S202 to S205, the control unit 13 may reduce the calculation amount by using Bayesian optimization instead of the brute-force approach.

After determining a set value, the control unit 13 ends the optimization processing.

The communication device (e.g., terminal device 30) constituting the communication system 2 stores setting information for controlling the array antenna, including the set value determined in Step S206. Then, the communication device controls the array antenna based on the stored setting information.

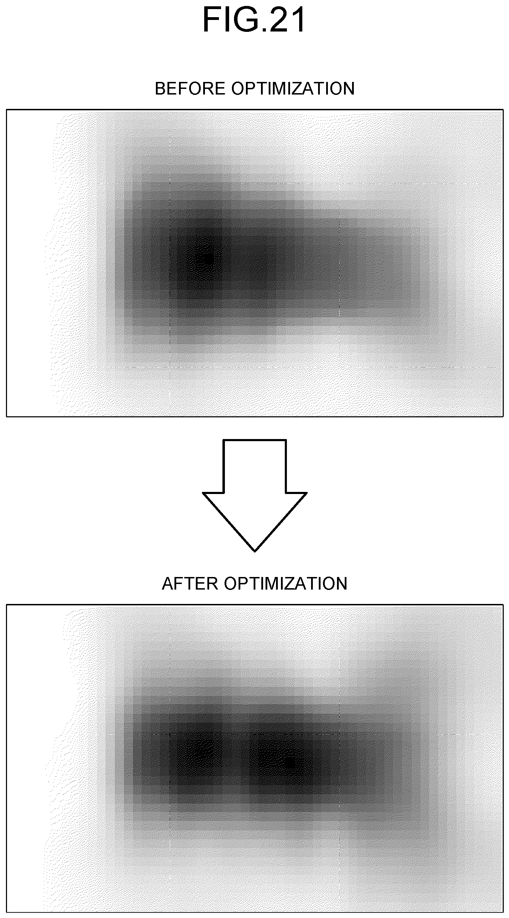

FIG. 21 illustrates a result of comparing power densities before and after power optimization. Specifically, FIG. 21 illustrates a result of comparing a power density in a case where the array antenna radiates radio waves at a set value (equal power) before power optimization with a power density in a case where the array antenna radiates radio waves at a set value (optimized power) after power optimization. It can be seen that the peak is shifted to the left before the power optimization but the power density is equalized by the power optimization.

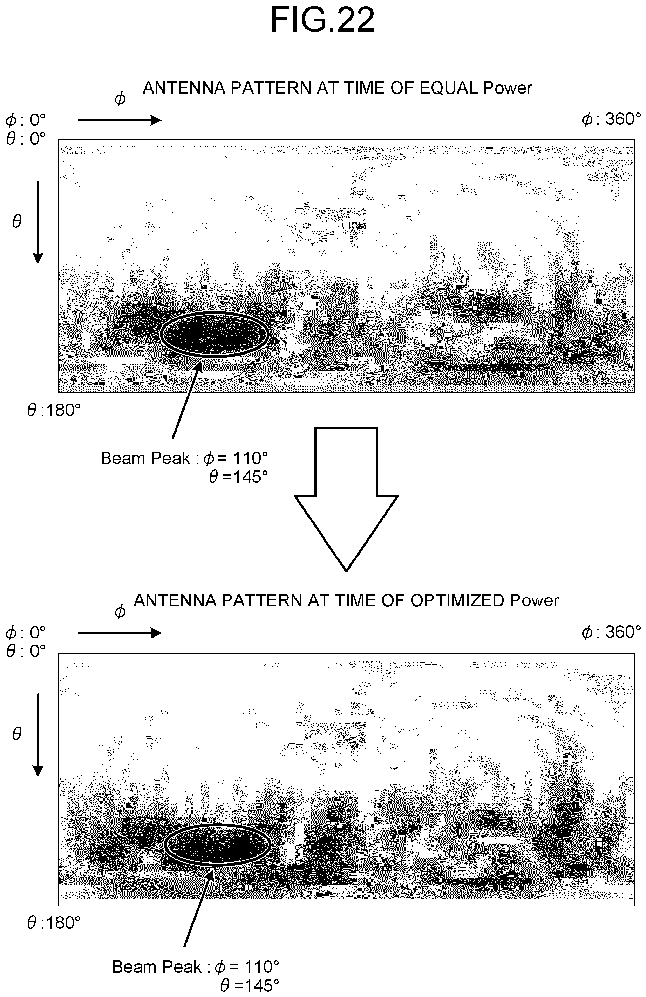

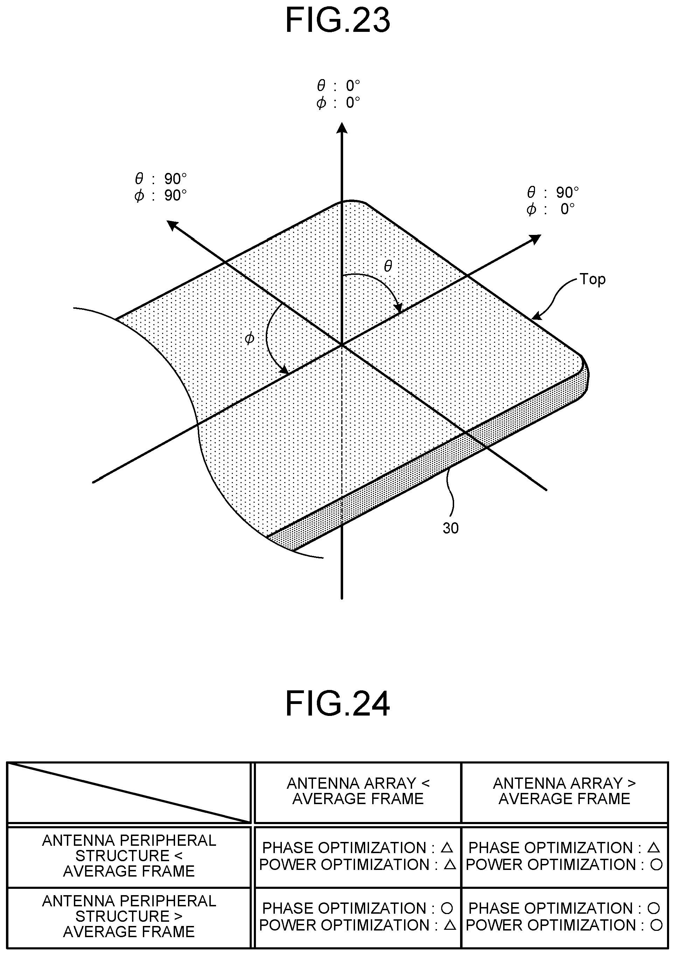

Note that, changing power at each feeding point (antenna port) for optimizing power density may influence a beam direction. FIG. 22 illustrates an influence on the beam direction in a case where pieces of power to antenna ports are individually changed. Specifically, FIG. 22 illustrates a confirmation result of the influence in five patch antenna array models. Furthermore, FIG. 23 illustrates the relation between $\theta$ and $\phi$ in FIG. 22. FIG. 22 reveals a minor influence on the beam direction. This is thought to be because the beam direction is greatly influenced by a phase supplied to each port. Therefore, it is considered that there is no particular problem in practical use even if power of each feeding point (antenna port) is optimized.

According to the second embodiment, the development device 10 determines the setting information in consideration of not only EIRP but power density at a predetermined legally regulated area average. Therefore, the communication device can exhibit high communication performance in a condition of a power density regulation. The communication device controls the array antenna based on the setting information determined in such a manner. Therefore, the communication device can exhibit high communication performance while satisfying the power density regulation.

### <3-3. Usefulness of Optimization Means>

FIG. 24 illustrates the usefulness of an optimization means. Specifically, FIG. 24 illustrates the relation among the size of the average frame C, the sizes of the antenna array and an antenna peripheral structure, and the optimization means. Furthermore, in FIG. 24, the antenna array can be rephrased as the array antenna. Furthermore, in the following description, the antenna array can be rephrased as the array antenna.

Here, the antenna peripheral structure refers to a structure related to radiation of radio waves around the antenna array. For example, the antenna peripheral structure may be the housing itself of the communication device in which the antenna array is disposed. Furthermore, for example, when the inside of the housing of the communication device is covered with metal and a window is opened for radiating radio waves only at a portion where the antenna array is disposed, the antenna peripheral structure may be the window itself. Note that the antenna peripheral structure may be a peripheral structure of a millimeter wave antenna (millimeter wave array antenna).

In FIG. 24, circles indicate that a corresponding optimization means is useful, and triangles indicate that a corresponding optimization means is not necessarily useful. Furthermore, the phase optimization indicates the phase optimization means described in the first embodiment, and the power optimization indicates the power optimization means described in the second embodiment.

When the average frame C is larger in size than any of the antenna array and the antenna peripheral structure, both the phase optimization and the power optimization are not necessarily useful. Furthermore, when the average frame C is larger in size than the antenna array and smaller in size than the antenna peripheral structure, the phase optimization is useful, but the power optimization is not necessarily useful. Furthermore, when the average frame C is smaller in size than the antenna array and larger in size than the antenna peripheral structure, the phase optimization is not necessarily useful, but the power optimization is useful. When the average frame C is smaller in size than both the antenna array and the antenna peripheral structure, both the phase optimization and the power optimization are useful.

When a mobile wireless device such as a smartphone is considered, a millimeter wave reflection structure can be larger than the average frame, so that optimization by phase control is considered to be always useful. Furthermore, a vertical relation between the antenna array size and a regulation size may change depending on frequency. When a large antenna array is used, power control is useful even at a frequency of 30 GHz or less.

### <3-4. Switching of Setting Information>

The optimization method of the embodiment is used to adjust setting information on power feeding to the array antenna in such a manner that power density is lowered. Although the optimization of the embodiment is effective on a transmission side, a reception side has no limitation of power density. Conventional EIRP optimization (i.e., antenna efficiency optimization) thus has better communication performance.

Thus, when the optimization means of the embodiment optimizes setting information (e.g., beam parameter), the communication device desirably switches the setting information between at the time of transmission and at the time of reception. More specifically, the communication device (e.g., terminal device 30) in the communication system 2 controls the array antenna based on the setting information calculated based on the above-described evaluation criterion (first evaluation criterion and/or second evaluation criterion) at the time of transmission of radio waves. In contrast, at the time of reception of radio waves, the communication device controls the array antenna based on other setting information calculated based on another evaluation criterion (e.g., conventional evaluation criterion) not including a power density at a predetermined legally regulated area average as an element.

Note that, when the communication device is the terminal device 30, the terminal device 30 controls a beam parameter at the time of transmission based on the direction of the base station 20 detected at the time of reception. Therefore, the terminal device 30 performs control such that the direction of the beam parameter at the time of transmission matches the direction of the beam parameter at the time of reception.

### <<4. Variation>>

The above-described embodiments are examples, and various modifications and applications are possible.

For example, although, in the above-described embodiments (first and second embodiments), the development device 10 calculates setting information used by the terminal device 30, the development device 10 may calculate setting information of another communication device. For example, the development device 10 may calculate setting information used by the base station 20 in the optimization processing. In this case, the other communication device (e.g., base station 20) may control transmission of radio waves based on the setting information calculated by the development device 10.

Furthermore, in the second embodiment, the optimum value of a feeding phase is calculated by applying EIRP and power density calculated while changing the feeding phase to the first evaluation criterion (Step S201 in FIG. 20). Thereafter, the optimum value of feeding power is calculated by applying the EIRP and the power density calculated while changing the feeding power to the second evaluation criterion (Steps S202 to S206 in FIG. 20). A value of the feeding phase used in the optimization processing according to the second embodiment is, however, not necessarily required to be calculated based on the first evaluation criterion. For example, the value of the feeding phase may be calculated based on another evaluation criterion not including a power density at a predetermined legally regulated area average as an element (e.g., may be calculated by conventional method). In this case, the word "first evaluation criterion" in Step S201 of the second embodiment can be replaced with "another evaluation criterion".

The control device that controls the development device 10, the base station 20, or the terminal device 30 of the embodiment may be implemented by a dedicated computer system or a general-purpose computer system.

For example, a communication program for executing the above-described operation is stored in a computer-readable recording medium such as an optical disk, a semiconductor memory, a magnetic tape, and a flexible disk to be distributed. Then, for example, the program is installed in a computer, and the above-described processing is executed to constitute a control device. In this case, the control device may be a device (e.g., personal computer) outside the development device 10, the base station 20, or the terminal device 30. Furthermore, the control device may be a device (e.g., control unit 13, control unit 23, or control unit 33) inside the development device 10, the base station 20, or the terminal device 30.

Furthermore, the above-described communication program may be stored in a disk device in a server device on a network such as the Internet so that the communication program can be, for example, downloaded to the computer. Furthermore, the above-described functions may be implemented by cooperation of an operating system (OS) and application software. In this case, a part other than the OS may be stored in a medium to be distributed, or the part other than the OS may be stored in a server device so that the part can be, for example, downloaded to the computer.

Furthermore, among pieces of processing described in the above-described embodiments, all or part of processing described as being performed automatically can be performed manually, or all or part of processing described as being performed manually can be performed automatically by a known method. In addition, the processing procedures, specific names, and information including various pieces of data and parameters in the above document and drawings can be optionally changed unless otherwise specified. For example, various pieces of information in each figure are not limited to the illustrated information.

Furthermore, each component of each illustrated device is functional and conceptual one, and does not necessarily need to be physically configured as illustrated. That is, the specific form of distribution/integration of each device is not limited to the illustrated one, and all or part of the device can be configured in a functionally or physically distributed/integrated manner in any unit in accordance with various loads and usage situations. Note that the configuration by the distribution/integration may be dynamically performed.

Furthermore, the above-described embodiments can be appropriately combined in a region where the processing contents do not contradict each other. Furthermore, the order of the steps in the flowcharts of the above-described embodiments can be appropriately changed.

Furthermore, for example, the embodiments can be carried out as any configuration constituting a device or a system, for example, a processor serving as a system large scale integration (LSI) or the like, a module using a plurality of processors or the like, a unit using a plurality of modules or the like, a set obtained by further adding other functions to the unit (i.e., configuration of part of device), and the like.

Note that, in the embodiments, a system means an assembly of a plurality of components (e.g., devices and modules (parts)), and it does not matter whether or not all the components are inside the same housing. Therefore, a plurality of devices housed in separate housings and connected via a network and one device in which a plurality of modules is housed in one housing are both systems.

Furthermore, for example, the embodiments can adopt a configuration of cloud computing in which one function is shared and processed by a plurality of devices in cooperation via a network.

<<5. Conclusion>>

As described above, the information processing device (e.g., development device 10) of the embodiment calculates EIRP of an array antenna and power density at a predetermined legally regulated area average while changing setting regarding the power feeding to the array antenna. Then, the information processing device calculates setting information on the power feeding to the array antenna by applying the calculated value to an evaluation criterion based on the EIRP and the power density at a predetermined legally regulated area average. That is, the information processing device determines the setting information in consideration of not only the EIRP but the power density at a predetermined legally regulated area average. Therefore, the information processing device can cause the communication device to exhibit high communication performance under a condition of a power density regulation.

Furthermore, the communication device controls the array antenna based on the setting information determined in such a manner. Therefore, the communication device can exhibit high communication performance while satisfying the power density regulation.

Although the embodiments of the present disclosure have been described above, the technical scope of the present disclosure is not limited to the above-described embodiments as it is, and various modifications can be made without departing from the gist of the present disclosure. Furthermore, components of different embodiments and variations may be appropriately combined.

Furthermore, the effects in the embodiments described in the present specification are merely examples and not limitations. Other effects may be exhibited.

Note that the present technology can also have the configurations as follows.

(1) A communication device comprising:

an acquisition unit that acquires setting information on power feeding to an array antenna, which has been calculated based on an evaluation criterion based on equivalent isotropic radiated power (EIRP) and power density at a predetermined legally regulated area average; and
a communication control unit that controls the array antenna based on the setting information.

(2) The communication device according to (1),
wherein the setting information includes a set value regarding at least one of feeding power and a feeding phase of each of a plurality of feeding points of the array antenna.
(3) The communication device according to (2),
wherein the setting information includes the set value calculated by applying, to the evaluation criterion, EIRP and power density at the predetermined legally regulated area average, which have been calculated while changing a setting regarding power feeding to the array antenna.
(4) The communication device according to (3),
wherein the setting information includes, as the set value, at least a value regarding a feeding phase of each of the plurality of feeding points of the array antenna.
(5) The communication device according to (4),
wherein the set value is an optimum value of the feeding phase calculated by applying, to the evaluation criterion, EIRP and power density at the predetermined legally regulated area average, which have been calculated while changing the feeding phase.
(6) The communication device according to (5),
wherein the optimum value is calculated by using Bayesian optimization.
(7) The communication device according to (3),
wherein the setting information includes, as the set value, at least a value regarding feeding power of each of the plurality of feeding points of the array antenna.
(8) The communication device according to (7),
wherein the set value is an optimum value of the feeding power calculated by applying, to the evaluation criterion, EIRP and power density at the predetermined legally regulated area average, which have been calculated while changing the feeding power.
(9) The communication device according to (8),

wherein at least one of the array antenna and a peripheral structure of the array antenna is smaller in size than an average frame at the predetermined legally regulated area average, and
the set value of the feeding power is calculated such that feeding power to an antenna element located at an edge of the array antenna is larger than feeding power to an antenna element located at a central portion of the array antenna.

(10) The communication device according to (8) or (9),
wherein the optimum value is calculated by using Bayesian optimization.
(11) The communication device according to (3),
wherein the setting information includes, as set values, a value regarding a feeding phase of each of the plurality of feeding points of the array antenna and a value regarding a feeding power of each of the plurality of feeding points of the array antenna.
(12) The communication device according to (11),

wherein the evaluation criterion includes a first evaluation criterion and a second evaluation criterion, and the set value includes:

an optimum value of the feeding phase calculated by applying, to the first evaluation criterion, EIRP and power density at the predetermined legally regulated area average, which have been calculated while changing the feeding phase; and
an optimum value of the feeding power calculated by applying, to the second evaluation criterion, EIRP and power density at the predetermined legally regulated area average, which have been calculated while changing the feeding power, in the optimum value of the feeding phase which has been calculated.

(13) The communication device according to (12),

wherein an average frame at the predetermined legally regulated area average is smaller in size than the array antenna, and
the set value of the feeding power is calculated such that feeding power to an antenna element located at an edge of the array antenna is larger than feeding power to an antenna element located at a central portion of the array antenna.

(14) The communication device according to (12) or (13),
wherein the optimum value is calculated by using Bayesian optimization.
(15) The communication device according to any one of (1) to (14),
wherein the communication control unit switches a setting for controlling the array antenna between at a time of transmission of a radio wave and at a time of reception of a radio wave.
(16) The communication device according to (15),
wherein the communication control unit controls the array antenna based on the setting information calculated based on the evaluation criterion at a time of transmission of a radio wave, and controls the array antenna based on other setting information calculated based on another evaluation criterion not including power density at the predetermined legally regulated area average as an element at a time of reception of a radio wave.
(17) A communication method comprising:

acquiring setting information on power feeding to an array antenna, which has been calculated based on an evaluation criterion including, as elements, equivalent isotropic radiated power (EIRP) and power density at a predetermined legally regulated area average; and
controlling the array antenna based on the setting information.

(18) An information processing device comprising:

a first calculation unit that calculates equivalent isotropic radiated power (EIRP) of an array antenna and power density at a predetermined legally regulated area average while changing a setting regarding power feeding to the array antenna; and
a second calculation unit that calculates setting information on the power feeding to the array antenna by applying a calculated value to an evaluation criterion based on EIRP and power density at the predetermined legally regulated area average.

(19) The information processing device according to (18),
wherein the setting information is a set value regarding at least one of feeding power and a feeding phase of each of a plurality of feeding points of the array antenna.
(20) An information processing method comprising:

calculating equivalent isotropic radiated power (EIRP) of an array antenna and power density at a predetermined legally regulated area average while changing a setting regarding power feeding to the array antenna; and
calculating setting information on the power feeding to the array antenna by applying a calculated value to an evaluation criterion based on EIRP and power density at the predetermined legally regulated area average.

Reference Signs List

21

1 DEVELOPMENT SYSTEM
2 COMMUNICATION SYSTEM
10 DEVELOPMENT DEVICE
20 BASE STATION
30 TERMINAL DEVICE
11 COMMUNICATION UNIT
12 INPUT UNIT
13, 23, 33 CONTROL UNIT
21, 31 WIRELESS COMMUNICATION UNIT
22, 32 STORAGE UNIT
131 FIRST CALCULATION UNIT
132 SECOND CALCULATION UNIT
331 ACQUISITION UNIT
332 COMMUNICATION CONTROL UNIT
211, 311 TRANSMISSION PROCESSING UNIT
212, 312 RECEPTION PROCESSING UNIT
213, 313 ANTENNA

**Claims**

1. A communication device comprising:

   an acquisition unit that acquires setting information on power feeding to an array antenna, which has been calculated based on an evaluation criterion based on equivalent isotropic radiated power (EIRP) and power density at a predetermined legally regulated area average; and
   a communication control unit that controls the array antenna based on the setting information.

2. The communication device according to claim 1,
   wherein the setting information includes a set value regarding at least one of feeding power and a feeding phase of each of a plurality of feeding points of the array antenna.

3. The communication device according to claim 2,
   wherein the setting information includes the set value calculated by applying, to the evaluation criterion, EIRP and power density at the predetermined legally regulated area average, which have been calculated while changing a setting regarding power feeding to the array antenna.

4. The communication device according to claim 3,
   wherein the setting information includes, as the set value, at least a value regarding a feeding phase of each of the plurality of feeding points of the array antenna.

5. The communication device according to claim 4,
   wherein the set value is an optimum value of the feeding phase calculated by applying, to the evaluation criterion, EIRP and power density at the predetermined legally regulated area average, which have been calculated while changing the feeding phase.

6. The communication device according to claim 5,
   wherein the optimum value is calculated by using Bayesian optimization.

7. The communication device according to claim 3,
   wherein the setting information includes, as the set value, at least a value regarding feeding power of each of the plurality of feeding points of the array antenna.

8. The communication device according to claim 7,
   wherein the set value is an optimum value of the feeding power calculated by applying, to the evaluation criterion, EIRP and power density at the predetermined legally regulated area average, which have been calculated while changing the feeding power.

9. The communication device according to claim 8,

wherein at least one of the array antenna and a peripheral structure of the array antenna is smaller in size than an average frame at the predetermined legally regulated area average, and
the set value of the feeding power is calculated such that feeding power to an antenna element located at an edge of the array antenna is larger than feeding power to an antenna element located at a central portion of the array antenna.

10. The communication device according to claim 8,
wherein the optimum value is calculated by using Bayesian optimization.

11. The communication device according to claim 3,
wherein the setting information includes, as set values, a value regarding a feeding phase of each of the plurality of feeding points of the array antenna and a value regarding a feeding power of each of the plurality of feeding points of the array antenna.

12. The communication device according to claim 11,

wherein the evaluation criterion includes a first evaluation criterion and a second evaluation criterion, and
the set value includes:

an optimum value of the feeding phase calculated by applying, to the first evaluation criterion, EIRP and power density at the predetermined legally regulated area average, which have been calculated while changing the feeding phase; and
an optimum value of the feeding power calculated by applying, to the second evaluation criterion, EIRP and power density at the predetermined legally regulated area average, which have been calculated while changing the feeding power, in the optimum value of the feeding phase which has been calculated.

13. The communication device according to claim 12,

wherein an average frame at the predetermined legally regulated area average is smaller in size than the array antenna, and
the set value of the feeding power is calculated such that feeding power to an antenna element located at an edge of the array antenna is larger than feeding power to an antenna element located at a central portion of the array antenna.

14. The communication device according to claim 12,
wherein the optimum value is calculated by using Bayesian optimization.

15. The communication device according to claim 1,
wherein the communication control unit switches a setting for controlling the array antenna between at a time of transmission of a radio wave and at a time of reception of a radio wave.

16. The communication device according to claim 15,
wherein the communication control unit controls the array antenna based on the setting information calculated based on the evaluation criterion at a time of transmission of a radio wave, and controls the array antenna based on other setting information calculated based on another evaluation criterion not including power density at the predetermined legally regulated area average as an element at a time of reception of a radio wave.

17. A communication method comprising:

acquiring setting information on power feeding to an array antenna, which has been calculated based on an evaluation criterion including, as elements, equivalent isotropic radiated power (EIRP) and power density at a predetermined legally regulated area average; and
controlling the array antenna based on the setting information.

18. An information processing device comprising:

a first calculation unit that calculates equivalent isotropic radiated power (EIRP) of an array antenna and power density at a predetermined legally regulated area average while changing a setting regarding power feeding to the array antenna; and
a second calculation unit that calculates setting information on the power feeding to the array antenna by applying a calculated value to an evaluation criterion based on EIRP and power density at the predetermined legally regulated area average.

19. The information processing device according to claim 18,
wherein the setting information is a set value regarding at least one of feeding power and a feeding phase of each of a plurality of feeding points of the array antenna.

20. An information processing method comprising:

calculating equivalent isotropic radiated power (EIRP) of an array antenna and power density at a predetermined legally regulated area average while changing a setting regarding power feeding to the array antenna; and
calculating setting information on the power feeding to the array antenna by applying a calculated value to an evaluation criterion based on EIRP and power density at the predetermined legally regulated area average.

# FIG.1

# FIG.2

# FIG.3

# FIG.4

# FIG.5

# FIG.6

# FIG.7

Backoff EIRP

# FIG.8

Instantaneous Tx power

# FIG.9

1

| | | |
|---|---|---|
| $10_1$ | $10_2$ | |
| DEVELOPMENT DEVICE | DEVELOPMENT DEVICE | ... |

2

| | | |
|---|---|---|
| $20_1$ | $20_2$ | $20_3$ |
| BASE STATION | BASE STATION | BASE STATION ... |
| $30_1$ | $30_2$ | $30_3$ |
| TERMINAL DEVICE | TERMINAL DEVICE | TERMINAL DEVICE ... |

# FIG.10

DEVELOPMENT DEVICE (10)

COMMUNI-CATION UNIT (11)

CONTROL UNIT (13)

FIRST CALCULATION UNIT (131)

SECOND CALCULATION UNIT (132)

INPUT UNIT (12)

# FIG.11

20

**BASE STATION**

21

WIRELESS COMMUNICATION UNIT

213

211

TRANSMISSION PROCESSING UNIT

| 211a | 211b | 211c | 211d |
|---|---|---|---|
| CODING UNIT | MODULA-TION UNIT | MULTI-PLEXING UNIT | WIRELESS TRANSMIS-SION UNIT |

212

RECEPTION PROCESSING UNIT

| 212d | 212c | 212b | 212a |
|---|---|---|---|
| DECODING UNIT | DEMODU-LATING UNIT | DEMULTI-PLEXING UNIT | WIRELESS RECEP-TION UNIT |

22

STORAGE UNIT

23

CONTROL UNIT

# FIG.12

TERMINAL DEVICE — 30

WIRELESS COMMUNICATION UNIT — 31

TRANSMISSION PROCESSING UNIT — 311

RECEPTION PROCESSING UNIT — 312

313

STORAGE UNIT — 32

SETTING INFORMATION

CONTROL UNIT — 33

ACQUISITION UNIT — 331

COMMUNICATION CONTROL UNIT — 332

# FIG.13

# FIG.14

# FIG.15

# FIG.16

# FIG.17

# FIG.18

START

SELECT SET VALUE ⌒S101

CALCULATE EIRP AND POWER DENSITY ⌒S102

CALCULATE EVALUATION VALUE ⌒S103

HAS END CONDITION BEEN SATISFIED? ⌒S104

NO

YES

DETERMINE SET VALUE ⌒S105

END

# FIG.19

# FIG.20

```
                    ┌─────────────────┐
                    │      START      │
                    └─────────────────┘
                             │
                             │            ⌐S201
                    ┌────────▼────────────────────┐
                    │ EXECUTE OPTIMIZATION OF PHASE │
                    └──────────────────────────────┘
                             │
          ┌──────────────────┤            ⌐S202
          │         ┌────────▼────────────┐
          │         │   SELECT SET VALUE   │
          │         └──────────────────────┘
          │                  │            ⌐S203
          │         ┌────────▼────────────┐
          │         │   CALCULATE EIRP AND │
          │         │    POWER DENSITY     │
          │         └──────────────────────┘
          │                  │            ⌐S204
          │         ┌────────▼────────────┐
          │         │ CALCULATE EVALUATION VALUE │
          │         └──────────────────────┘
          │                  │            ⌐S205
          │  NO     ◇────────▼────────────◇
          └─────────  HAS END CONDITION
                       BEEN SATISFIED?
                    ◇─────────┬──────────◇
                          YES │            ⌐S206
                    ┌─────────▼───────────┐
                    │  DETERMINE SET VALUE │
                    └──────────────────────┘
                             │
                    ┌────────▼────────┐
                    │      END        │
                    └─────────────────┘
```

# FIG.21

BEFORE OPTIMIZATION

AFTER OPTIMIZATION

# FIG.22

ANTENNA PATTERN AT TIME OF EQUAL Power

$\phi$ : 0°
$\theta$ : 0°
$\phi$ : 360°

$\theta$

$\theta$ :180°

Beam Peak : $\phi$ = 110°
$\theta$ =145°

ANTENNA PATTERN AT TIME OF OPTIMIZED Power

$\phi$ : 0°
$\theta$ : 0°
$\phi$ : 360°

$\theta$

$\theta$ :180°

Beam Peak : $\phi$ = 110°
$\theta$ =145°

# FIG.23

# FIG.24

| | ANTENNA ARRAY < AVERAGE FRAME | ANTENNA ARRAY > AVERAGE FRAME |
|---|---|---|
| ANTENNA PERIPHERAL STRUCTURE < AVERAGE FRAME | PHASE OPTIMIZATION : △ POWER OPTIMIZATION : △ | PHASE OPTIMIZATION : △ POWER OPTIMIZATION : ○ |
| ANTENNA PERIPHERAL STRUCTURE > AVERAGE FRAME | PHASE OPTIMIZATION : ○ POWER OPTIMIZATION : △ | PHASE OPTIMIZATION : ○ POWER OPTIMIZATION : ○ |

# INTERNATIONAL SEARCH REPORT

| International application No. |
|---|
| **PCT/JP2023/030221** |

| | |
|---|---|
| **A.** | **CLASSIFICATION OF SUBJECT MATTER** |

*H01Q 3/26*(2006.01)i; *H04W 52/04*(2009.01)i; *H04W 88/02*(2009.01)i
FI:   H01Q3/26 Z; H04W52/04; H04W88/02 140

According to International Patent Classification (IPC) or to both national classification and IPC

| | |
|---|---|
| **B.** | **FIELDS SEARCHED** |

Minimum documentation searched (classification system followed by classification symbols)

H01Q3/26; H04W52/04; H04W88/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | JP 2001-077720 A (NAGANO JAPAN RADIO CO) 23 March 2001 (2001-03-23)<br>entire text, all drawings | 1-20 |
| A | JP 2002-152116 A (SAMSUNG YOKOHAMA RESEARCH INSTITUTE CO LTD, SAMSUNG ELECTRONICS CO LTD) 24 May 2002 (2002-05-24)<br>entire text, all drawings | 1-20 |
| A | JP 2022-533974 A (QUALCOMM INCORPORATED) 27 July 2022 (2022-07-27)<br>entire text, all drawings | 1-20 |
| A | JP 2020-048285 A (TOSHIBA CORP) 26 March 2020 (2020-03-26)<br>entire text, all drawings | 1-20 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 October 2023** | **31 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/030221**

| Patent document cited in search report | | | Publication date (day/month/year) | Patent family member(s) | | | Publication date (day/month/year) |
|---|---|---|---|---|---|---|---|
| JP | 2001-077720 | A | 23 March 2001 | (Family: none) | | | |
| JP | 2002-152116 | A | 24 May 2002 | KR | 10-2002-0037259 | A | |
| JP | 2022-533974 | A | 27 July 2022 | CN | 114009125 | A | |
| | | | | KR | 10-2022-0011629 | A | |
| | | | | US | 2020/0374818 | A1 | |
| | | | | US | 2022/0086773 | A1 | |
| | | | | WO | 2020/242701 | A1 | |
| JP | 2020-048285 | A | 26 March 2020 | US | 2020/0091602 | A1 | |
| | | | | US | 2020/0373661 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021084592 A